(19) **Europäisches Patentamt / European Patent Office / Office européen des brevets**

(11) **EP 4 149 715 B1**

(12) **EUROPEAN PATENT SPECIFICATION**

(45) Date of publication and mention
of the grant of the patent:
**29.04.2026   Bulletin 2026/18**

(21) Application number: **21804432.9**

(22) Date of filing: **10.03.2021**

(51) International Patent Classification (IPC):
**B23K 26/70** *(2014.01)*     **B23K 26/352** *(2014.01)*
**B23K 26/062** *(2014.01)*     **B23K 26/03** *(2006.01)*
**B23K 26/06** *(2014.01)*     **B23K 31/12** *(2006.01)*
**B23K 26/0622** *(2014.01)*     **B23K 26/082** *(2014.01)*
**B23K 26/351** *(2014.01)*     **B23K 26/38** *(2014.01)*

(52) Cooperative Patent Classification (CPC):
**B23K 26/38; B23K 26/03; B23K 26/032;
B23K 26/062; B23K 26/0622; B23K 26/082;
B23K 26/351; B23K 26/352; B23K 31/125**

(86) International application number:
**PCT/US2021/021719**

(87) International publication number:
**WO 2021/230960 (18.11.2021 Gazette 2021/46)**

(54) **LASER PROCESSING APPARATUS FACILITATING DIRECTED INSPECTION OF LASER-PROCESSED WORKPIECES**

LASERBEARBEITUNGSVORRICHTUNG ZUR ERLEICHTERUNG DER GERICHTETEN INSPEKTION VON LASERBEARBEITETEN WERKSTÜCKEN

APPAREIL DE TRAITEMENT AU LASER FACILITANT L'INSPECTION DIRIGÉE DE PIÈCES TRAITÉES AU LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.05.2020   US 202063024999 P
11.12.2020   US 202063124443 P**

(43) Date of publication of application:
**22.03.2023   Bulletin 2023/12**

(60) Divisional application:
**26165895.9**

(73) Proprietor: **Electro Scientific Industries, Inc.
Beaverton OR 97005 (US)**

(72) Inventors:
• **RIECHEL, Patrick
  Beaverton, OR 97005 (US)**
• **ROBERTS, Jake
  Beaverton, OR 97005 (US)**

(74) Representative: **HGF
HGF Limited
4th Floor, 1 City Square
Leeds LS1 2ES (GB)**

(56) References cited:
**EP-A1- 3 326 749     WO-A1-2019/236616
CN-B- 102 147 602     US-A- 5 171 963
US-A- 5 171 963     US-A1- 2010 140 237
US-A1- 2010 140 237     US-A1- 2020 111 205**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

I. Technical Field

Embodiments disclosed herein relate generally to laser processing apparatus and methods for laser-processing of workpieces.

II. Discussion of the Related Art

Laser processing can be conducted on numerous different workpieces using various lasers effecting a variety of processes. For example, laser micromachining processes have been developed to form features such as through-via or blind-via holes in workpieces such as printed circuit boards (PCBs) or integrated circuit (IC) packages. A goal of laser micromachining processes is to provide consistent quality of features over the entire workpiece. Some measures which define feature quality include the location, size, and shape of the feature. Other measures can include sidewall angle, bottom texture, volume and texture of debris left in the feature after processing, and the like.

One problem with laser micromachining processes is that, due to non-uniformities in the workpiece, performing the micromachining processes with the same laser parameters at two different locations on the workpiece can result in differences in feature qualities. Examples of workpiece differences that influence the results include differences in thickness, differences in workpiece flatness, and differences in surface preparation that makes the workpiece more or less reflective of laser power. These variations are not constant over the entire workpiece and can vary depending upon location of the individual feature. Furthermore, these variations can be repetitive from workpiece to workpiece in a given lot of workpieces due to normal variations in manufacturing tolerances.

Other phenomena that affect the ability of a laser micromachining system to form features with consistent quality is aging and/or damage to the laser source used to generate the beam of laser energy and the optical components used to direct the laser energy to the workpiece. As the laser source ages, its ability to output laser energy with consistent characteristics (e.g., average power) can degrade. Further, as optical components age, they are subject to contamination, most notably from debris from the micromachining process itself and damage from the high-power laser energy transmitted therethrough. These and other forms of degradation can cause the laser spot projected onto the workpiece to change in size, shape, intensity or other characteristics, thereby changing the size, shape, depth, or other measures of the feature being micromachined.

Some laser micromachining systems use real time controls to alter the characteristics of the beam of laser energy as the feature is being machined in an attempt to mitigate the effects of changes in the laser source or optical components due to aging or damage. In some systems, a photodetector is used to monitor the laser power as the workpiece is being processed. The output from the photodetector is used to adjust the laser power that is incident upon the workpiece, in real-time, to compensate for some of the sources of variability in laser power at the workpiece. This can be accomplished by operating an optical component such as a variable attenuator to adjust the amount of laser energy that is ultimately transmitted to the workpiece to a level suitable to form each feature.

It is known to record information concerning characteristics of the beam of laser energy used to form each feature in a workpiece, and to associate that information with an identifier that identifies the location of the feature in the workpiece (e.g., thereby creating "process data"). After processing of the workpiece is completed, the process data generated can be analyzed to predict when the laser micromachining system may have had problems forming features of suitable quality. For example, if the recorded information shows that the system may have needed more laser power than that which was available, features formed with less laser power may not have had sufficient material removed.

It is also known to inspect processed workpieces in order to assess the quality of the features that were formed. Results of the inspection can be compared with the process data (if any was created) to assess the performance of the characteristics of the beam of laser energy used to form the features in the workpiece. Post-processing inspection, as performed on workpieces such as PCBs, is performed either manually (e.g., by a user inspecting the workpiece using a microscope) or automatically (e.g., by automated optical inspection, "AOI"). If inspection is performed manually, the features (i.e., via holes) inspected constitute only sample of the total number of features formed, as a workpiece can often have hundreds or thousands of features formed therein. If inspection is performed by AOI, all features of one or more workpieces in a lot can be inspected immediately after the features are formed (i.e., when the features are through-via holes) or after post-processing steps are performed to clean the features (e.g., when the features are blind-via holes, desmear, etch and shadow processing steps are performed to remove debris within the hole).

Conventional post-processing inspection techniques can be problematic for numerous reasons. In the case of manual inspection, operators or quality inspectors using microscopes can suffer from fatigue, which can result in missing defects at times of lowered attention. When all features are inspected (e.g., using AOI techniques), extra time is unnecessarily spent inspecting areas of the workpiece that are less likely to have defective features formed therein. When the features are randomly inspected, there is a risk that some areas of the workpiece more likely to have defective features are not inspected, resulting in missed quality issues that can cause a workpiece to be scrapped.

WO 2019/236616 A1, on which the preamble of claim 1 is based, discloses laser-processing apparatuses comprising a laser source, scan lens, multiple beam positioners (e.g. AOD, galvanometer), a movable stage, camera(s), sensors, and a controller with databases for process/measurement data and communications modules for remote processing and statistical process control (SPC). However, WO 2019/236616 does not disclose a controller configured to select candidate features for directed inspection by comparing per-feature laser energy to a threshold and to identify the locations of such features for inspection.

**SUMMARY**

The present invention is characterised as a laser-processing apparatus as defined in claim 1.

**BRIEF DESCRIPTION OF THE DRAWINGS**

    FIG. 1 schematically illustrates a laser-processing apparatus in accordance with one embodiment of the present invention.
    FIG. 2 illustrates an example process for collecting manually-input classifications of candidate features, in accordance with one embodiment of the present invention.

**DETAILED DESCRIPTION**

Example embodiments are described herein with reference to the accompanying drawings. Unless otherwise expressly stated, in the drawings the sizes, positions, etc., of components, features, elements, etc., as well as any distances therebetween, are not necessarily to scale, but are exaggerated for clarity. In the drawings, like numbers refer to like elements throughout. Thus, the same or similar numbers may be described with reference to other drawings even if they are neither mentioned nor described in the corresponding drawing. Also, even elements that are not denoted by reference numbers may be described with reference to other drawings.

The terminology used herein is for the purpose of describing particular example embodiments only and is not intended to be limiting. Unless otherwise defined, all terms (including technical and scientific terms) used herein have the same meaning as commonly understood by one of ordinary skill in the art. As used herein, the singular forms "a," "an" and "the" are intended to include the plural forms as well, unless the context clearly indicates otherwise. It should be recognized that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise specified, a range of values, when recited, includes both the upper and lower limits of the range, as well as any sub-ranges therebetween. Unless indicated otherwise, terms such as "first," "second," etc., are only used to distinguish one element from another. For example, one node could be termed a "first node" and similarly, another node could be termed a "second node", or vice versa.

Unless indicated otherwise, the term "about," "thereabout," etc., means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. Spatially relative terms, such as "below," "beneath," "lower," "above," and "upper," and the like, may be used herein for ease of description to describe one element or feature's relationship to another element or feature, as illustrated in the FIGS. It should be recognized that the spatially relative terms are intended to encompass different orientations in addition to the orientation depicted in the FIGS. For example, if an object in the FIGS. is turned over, elements described as "below" or "beneath" other elements or features would then be oriented "above" the other elements or features. Thus, the exemplary term "below" can encompass both an orientation of above and below. An object may be otherwise oriented (e.g., rotated 90 degrees or at other orientations) and the spatially relative descriptors used herein may be interpreted accordingly.

I. Overview

Embodiments described herein relate generally to methods and apparatuses for laser-processing (or, more simply, "processing") a workpiece. Generally the processing is accomplished, either in whole or in part, by irradiating the workpiece with laser radiation, to heat, melt, evaporate, ablate, crack, discolor, polish, roughen, carbonize, foam, or otherwise modify one or more properties or characteristics of one or more materials from which the workpiece is formed (e.g., in terms of chemical composition, atomic structure, ionic structure, molecular structure, electronic structure, microstructure, nanostructure, density, viscosity, index of refraction, magnetic permeability, relative permittivity, texture, color, hardness, transmissivity to electromagnetic radiation, or the like or any combination thereof). Materials to be processed may be present at an exterior of the workpiece prior to or during processing, or may be located completely within the workpiece (i.e., not present at an exterior of the workpiece) prior to or during processing.

Specific examples of processes that may be carried out by the disclosed apparatus for laser-processing include via drilling or other hole formation, cutting, perforating, welding, scribing, engraving, marking (e.g., surface marking, sub-surface marking, etc.), laser-induced forward transfer, cleaning, bleaching, bright pixel repair (e.g., color filter darkening, modification of OLED material, etc.), decoating, surface texturing (e.g., roughening, smoothing, etc.), or the like or any combination thereof. Thus, one or more features on that may be formed on or within a workpiece, as a result of the processing, can include openings, slots, vias or other holes, grooves, trenches, scribe lines, kerfs, recessed regions, conductive traces, ohmic contacts, resist patterns, human- or machine-readable indicia (e.g., comprised of one or more regions in or on the workpiece having one or more visually or texturally distinguishing characteristics), or the like or any combination thereof. Features such as openings, slots, vias, holes, etc., can have any suitable or desirable shape (e.g., circular, elliptical, square, rectangular, triangular, annular, or the like or any combination thereof) when viewed from a top plan view. Further, features such as openings, slots, vias, holes, etc., can extend completely through the workpiece (e.g., so as to form so-called "through vias," "through holes," etc.) or only partially through the workpiece (e.g., so as to form so-called "blind vias," "blind holes," etc.).

Workpieces that may be processed can be generically characterized being formed of one or more metals, polymers, ceramics, composites, or any combination thereof (e.g., whether as an alloy, compound, mixture, solution, composite, etc.). Accordingly, materials that may be processed include one or more metals such as Al, Ag, Au, Cr, Cu, Fe, In, Mg, Mo, Ni, Pt, Sn, Ti, or the like, or any combination thereof (e.g., whether as an alloy, composite, etc.), conductive metal oxides (e.g., ITO, etc.), transparent conductive polymers, ceramics, waxes, resins, interlayer dielectric materials (e.g., silicon dioxide, silicon nitride, silicon oxynitride, etc., low-k dielectric materials such as methyl silsesquioxane (MSQ), hydrogen silsesquioxane (HSQ), fluorinated tetraethyl orthosilicate (FTEOS), or the like or any combination thereof), organic dielectric materials (e.g., SILK, benzocyclobutene, Nautilus, (all manufactured by Dow), polyfluorotetraethylene, (manufactured by DuPont), FLARE, (manufactured by Allied Chemical), etc., or the like or any combination thereof), semiconductor or optical device substrate materials (e.g., $Al_2O_3$, AlN, BeO, Cu, GaAS, GaN, Ge, InP, Si, $SiO_2$, SiC, $Si_{1-x}Ge_x$ (where $0.0001 < x < 0.9999$), or the like, or any combination or alloy thereof), glass (e.g., fused quartz, soda-lime-silica glass, sodium borosilicate glass, lead oxide glass, aluminosilicate glass, germanium oxide glass, aluminate glass, phosphate glass, borate glass, chalcogenide glass, amorphous metal, or the like or any combination thereof), sapphire, polymeric materials (e.g., polyamide, polyimide, polyester, polyethylene naphthalate (PEN), polyethylene terephthalate (PET), polyacetal, polycarbonate, modified polyphenylene ether, polybutylene terephthalate, polyphenylene sulfide, polyether sulfone, polyether imide, polyether ether ketone, liquid crystal polymer, acrylonitrile butadiene styrene, or any compound, composite or alloy thereof), leather, paper, build-up materials (e.g., AJINOMOTO Build-up Film, also known as "ABF", etc.), solder resist, or the like or any composite, laminate, or other combination thereof.

Specific examples of workpieces that may be processed include, panels of printed circuit boards (PCBs) (also referred to herein as "PCB panels"), PCBs, PCB laminates (e.g., FR4, High Tg Epoxy, BT, polyimide, or the like or any combination thereof), PCB laminate prepregs, substrate-like PCBs (SLPs), panels of flexible printed circuits (FPCs) (also referred to herein as "FPC panels"), FPCs, coverlay films, integrated circuits (ICs), IC substrates, IC packages (ICPs), light-emitting diodes (LEDs), LED packages, semiconductor wafers, electronic or optical device substrates, interposers, lead frames, lead frame blanks, display substrates (e.g., substrates having TFTs, color filters, organic LED (OLED) arrays, quantum dot LED arrays, or the like or any combination thereof, formed thereon), lenses, mirrors, turbine blades, powders, films, foils, plates, molds (e.g., wax molds, molds for injection-molding processes, investment-casting processes, etc.), fabrics (woven, felted, etc.), surgical instruments, medical implants, consumer packaged goods, shoes, bicycles, automobiles, automotive or aerospace parts (e.g., frames, body panels, etc.), appliances (e.g., microwaves, ovens, refrigerators, etc.), device housings (e.g., for watches, computers, smartphones, tablet computers, wearable electronic devices, or the like or any combination thereof).

## II. System - Overview

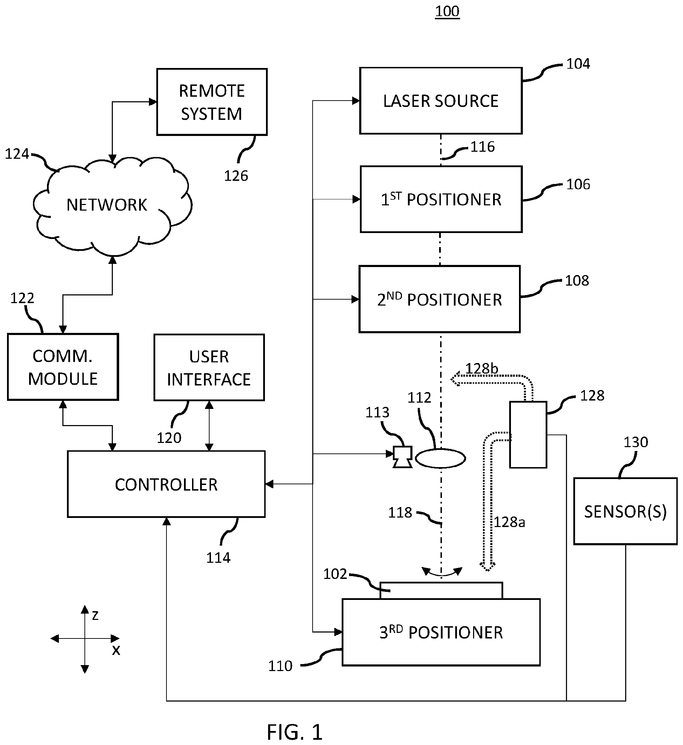

FIG. 1 schematically illustrates a laser-processing apparatus in accordance with one embodiment of the present invention.

Referring to the embodiment shown in FIG. 1, a laser-processing apparatus 100 (also referred to herein simply as an "apparatus") for processing a workpiece 102 can be characterized as including a laser source 104 for generating a beam of laser energy, one or more positioners (e.g., a first positioner 106, a second positioner 108, a third positioner 110, or any combination thereof) and a scan lens 112.

Laser energy transmitted along a beam path 116, through the scan lens 112, propagates along a beam axis 118 so as to be delivered to the workpiece 102. Laser energy propagating along the beam axis 118 may be characterized as having a Gaussian-type spatial intensity profile or a non-Gaussian-type (i.e., "shaped") spatial intensity profile (e.g., a "top-hat" spatial intensity profile). Regardless of the type of spatial intensity profile, the spatial intensity profile can also be characterized as a shape (i.e., a cross-sectional shape, also referred to herein as a "spot shape") of the beam of laser energy propagating along the beam axis 118 (or beam path 116), which may be circular, elliptical, square, rectangular, triangular, hexagonal, ring-shaped, etc., or arbitrarily shaped. As used herein, the term "spot size" refers to the diameter or maximum spatial width of the beam of laser energy delivered at a location (also referred to as a "process spot," "spot location" or, more simply, a "spot") where the beam axis 118 intersects a region of the workpiece 102 that is to be, at least partially, processed by the delivered beam of laser energy. For purposes of discussion herein, spot size is measured as a radial or transverse distance from the beam axis 118 to where the optical intensity drops to, at least, $1/e^2$ of the optical intensity at the beam axis 118. Generally, the spot size of the beam of laser energy will be at a minimum at the beam waist. Once delivered to the workpiece 102, laser energy within the beam can be characterized as impinging the workpiece 102 at a spot size in a range from 2 $\mu$m to 200 $\mu$m. It will be appreciated, however, that the spot size can be made smaller than 2 $\mu$m or larger than 200 $\mu$m. Thus, the beam of laser energy delivered to the workpiece 102 can have a spot size greater than, less than, or equal to 2 $\mu$m, 3 $\mu$m, 5 $\mu$m, 7 $\mu$m, 10 $\mu$m, 15 $\mu$m, 30 $\mu$m, 35 $\mu$m, 40 $\mu$m, 45 $\mu$m, 50 $\mu$m, 55 $\mu$m, 80 $\mu$m, 100 $\mu$m, 150 $\mu$m, 200 $\mu$m, etc., or between any of these values.

Generally, the aforementioned positioners (e.g., the first positioner 106, the second positioner 108 and the third positioner 110 are configured to change the relative position between the spot and the workpiece 102. In view of the description that follows, it should be recognized that inclusion of the first positioner 106 is optional (i.e., the apparatus 100 need not include the first positioner 106), provided that the apparatus 100 includes the second positioner 108, the third positioner 110, or a combination thereof. Likewise, it should be recognized that inclusion of the second positioner 108 is optional, provided that the apparatus 100 includes the first positioner 106, the third positioner 110, or a combination thereof. Furthermore, it should similarly be recognized that inclusion of the third positioner 110 is optional, provided that the apparatus 100 includes the first positioner 106, the second positioner 108, or a combination thereof. Lastly, it should be recognized that, when appropriate, the apparatus 100 may include only the first positioner 106, only the second positioner 108 or only the third positioner 110.

The apparatus 100 also includes one or more optical components (e.g., beam expanders, beam shapers, apertures, filters, collimators, lenses, mirrors, polarizers, wave plates, diffractive optical elements, refractive optical elements, or the like or any combination thereof) to focus, expand, collimate, shape, polarize, filter, split, combine, crop, or otherwise modify, condition, direct, etc., the beam of laser energy obtained from the laser source 104 along one or more beam paths (e.g., beam path 116) to the scan lens 112. Such optical components may be inserted into the beam path 116 at any suitable or desired location (e.g., between the laser source 104 and the first positioner 106, between the laser source 104 and the second positioner 108, between the first positioner 106 and the second positioner 108, between the second positioner 108 and the scan lens 112, or the like or any combination thereof).

One example of such an optical component is a variable optical attenuator (VOA), configured to selectively and variably reduce the power of the laser pulses propagating along the beam path 116. Examples of a VOA that can be incorporated include one or more systems such as a variable neutral density filter, an acousto-optical (AO) modulator (AOM), an AO deflector (AOD), a liquid crystal variable attenuator (LCVA), a micro-electro-mechanical system (MEMS)-based VOA, an optical attenuator wheel, a polarizer/waveplate filter, or the like or any combination thereof.

Another example of such an optical component is a beam size adjustment mechanism operative to selectively and variably adjust a size of the beam of laser energy (also referred to herein as "beam size") incident upon the scan lens 112. As used herein, the term "beam size" refers to the diameter or width of the beam of laser energy, and can be measured as a radial or transverse distance from the beam axis 118 to where the optical intensity drops to $1/e^2$ of the optical intensity at the axis of propagation along the beam path 116. Examples of a beam size adjustment mechanism that can be incorporated include an AOD system, a zoom lens, a motorized variable beam expander, a deformable mirror, a variable-radius mirror, a variable-focus moiré lens, a motorized Z-axis lens, a motorized iris diaphragm, a motorized aperture wheel, or the like or any combination thereof. Adjusting the beam size of the beam of laser energy incident upon the scan lens 112 can result in a change in spot size at the workpiece 102.

Another example of such an optical component is a beam shape adjustment mechanism operative to selectively and variably adjust a shape of the beam of laser energy (also referred to herein as "beam size") incident upon the scan lens 112. Examples of a beam shape adjustment mechanism that can be incorporated include an AOD, a deformable mirror, a variable-radius mirror, a variable-focus moiré lens, or the like or any combination thereof. Adjusting the beam shape of the beam of laser energy incident upon the scan lens 112 can result in a change in spot shape at the workpiece 102.

A. Laser Source

In one embodiment, the laser source 104 is operative to generate laser pulses. As such, the laser source 104 may include a pulse laser source, a CW laser source, a QCW laser source, a burst mode laser, or the like or any combination thereof. In the event that the laser source 104 includes a QCW or CW laser source, the laser source 104 may further include a pulse gating unit (e.g., an acousto-optic (AO) modulator (AOM), a beam chopper, etc.) to temporally modulate beam of laser radiation output from the QCW or CW laser source. Although not illustrated, the apparatus 100 may optionally include one or more harmonic generation crystals (also known as "wavelength conversion crystals") configured to convert a wavelength of light output by the laser source 104. In another embodiment, however, the laser source 104 may be provided as a QCW laser source or a CW laser source and not include a pulse gating unit. Thus, the laser source 104 can be broadly characterized as operative to generate a beam of laser energy, which may manifested as a series of laser pulses or as a continuous or quasi-continuous laser beam, which can thereafter be propagated along the beam path 116. Although many embodiments discussed herein make reference to laser pulses, it should be recognized that continuous beams may alternatively, or additionally, be employed whenever appropriate.

Laser light in the UV range of the electromagnetic spectrum may have one or more wavelengths in a range from 10 nm (or thereabout) to 385 nm (or thereabout), such as 10 nm, 121 nm, 124 nm, 157 nm, 200 nm, 334 nm, 337 nm, 351 nm, 380 nm, etc., or between any of these values. Laser light in the visible, green range of the electromagnetic spectrum may have one or more wavelengths in a range from 500 nm (or thereabout) to 560 nm (or thereabout), such as 511 nm, 515 nm, 530 nm, 532 nm, 543 nm, 568 nm, etc., or between any of these values. Laser light in the IR range of the electromagnetic spectrum may have one or more wavelengths in a range from 750 nm (or thereabout) to 15 $\mu$m (or thereabout), such as 600 nm to 1000 nm, 752.5 nm, 780 nm to 1060 nm, 799.3 nm, 980 nm, 1047 nm, 1053 nm, 1060 nm, 1064 nm, 1080 nm, 1090 nm, 1152 nm, 1150 nm to 1350 nm, 1540 nm, 2.6 $\mu$m to 4 $\mu$m, 4.8 $\mu$m to 8.3 $\mu$m, 9.4 $\mu$m, 10.6 $\mu$m, etc., or between any of these values.

Laser pulses output by the laser source 104 can have a pulse width or pulse duration (i.e., based on the full-width at half-maximum (FWHM) of the optical power in the pulse versus time) that is in a range from 10 fs to 900 ms. It will be appreciated, however, that the pulse duration can be made smaller than 10 fs or larger than 900 ms. Thus, at least one laser pulse output by the laser source 104 can have a pulse duration less than, greater than or equal to 10 fs, 15 fs, 30 fs, 50 fs, 100 fs, 150 fs, 200 fs, 300 fs, 500 fs, 600 fs, 750 fs, 800 fs, 850 fs, 900 fs, 950 fs, 1 ps, 2 ps, 3 ps, 4 ps, 5 ps, 7 ps, 10 ps, 15 ps, 25 ps, 50 ps, 75 ps, 100 ps, 200 ps, 500 ps, 1 ns, 1.5 ns, 2 ns, 5 ns, 10 ns, 20 ns, 50 ns, 100 ns, 200 ns, 400 ns, 800 ns, 1000 ns, 2 $\mu$s, 5 $\mu$s, 10 $\mu$s, 50 $\mu$s, 100 $\mu$s, 300 $\mu$s, 500 $\mu$s, 900 $\mu$s, 1 ms, 2 ms, 5 ms, 10 ms, 20 ms, 50 ms, 100 ms, 300 ms, 500 ms, 900 ms, 1 s, etc., or between any of these values.

Laser pulses output by the laser source 104 can have an average power in a range from 5 mW to 50 kW. It will be appreciated, however, that the average power can be made smaller than 5 mW or larger than 50 kW. Thus, laser pulses output by the laser source 104 can have an average power less than, greater than or equal to 5 mW, 10 mW, 15 mW, 20 mW, 25 mW, 50 mW, 75 mW, 100 mW, 300 mW, 500 mW, 800 mW, 1 W, 2 W, 3 W, 4 W, 5 W, 6 W, 7 W, 10 W, 15 W, 18 W, 25 W, 30 W, 50 W, 60 W, 100 W, 150 W, 200 W, 250 W, 500 W, 2 kW, 3 kW, 20 kW, 50 kW, etc., or between any of these values.

Laser pulses can be output by the laser source 104 at a pulse repetition rate in a range from 5 kHz to 1 GHz. It will be appreciated, however, that the pulse repetition rate can be less than 5 kHz or larger than 1 GHz. Thus, laser pulses can be output by the laser source 104 at a pulse repetition rate less than, greater than or equal to 5 kHz, 50 kHz, 100 kHz, 175 kHz, 225 kHz, 250 kHz, 275 kHz, 500 kHz, 800 kHz, 900 kHz, 1 MHz, 1.5 MHz, 1.8 MHz, 1.9 MHz, 2 MHz, 2.5 MHz, 3 MHz, 4 MHz, 5 MHz, 10 MHz, 20 MHz, 50 MHz, 60 MHz, 100 MHz, 150 MHz, 200 MHz, 250 MHz, 300 MHz, 350 MHz, 500 MHz, 550 MHz, 600 MHz, 900 MHz, 2 GHz, 10 GHz, etc., or between any of these values.

In addition to wavelength, pulse duration, average power and pulse repetition rate, laser pulses delivered to the workpiece 102 can be characterized by one or more other characteristics such as pulse energy, peak power, etc., which can be selected (e.g., optionally based on one or more other characteristics such as wavelength, pulse duration, average power and pulse repetition rate, etc.) to irradiate the workpiece 102 at the process spot at an optical intensity (measured in W/cm$^2$), fluence (measured in J/cm$^2$), etc., sufficient to process the workpiece 102 (e.g., to form one or more features having one or more desired characteristics).

Examples of types of lasers that the laser source 104 may be characterized as gas lasers (e.g., carbon dioxide lasers, carbon monoxide lasers, excimer lasers, etc.), solid-state lasers (e.g., Nd:YAG lasers, etc.), rod lasers, fiber lasers, photonic crystal rod/fiber lasers, passively mode-locked solid-state bulk or fiber lasers, dye lasers, mode-locked diode lasers, pulsed lasers (e.g., ms-, ns-, ps-, fs-pulsed lasers), CW lasers, QCW lasers, or the like or any combination thereof. Depending upon their configuration, gas lasers (e.g., carbon dioxide lasers, etc.) may be configured to operate in one or more modes (e.g., in CW mode, QCW mode, pulsed mode, or any combination thereof). Specific examples of laser sources that may be provided as the laser source 104 include one or more laser sources such as: the BOREAS, HEGOA, SIROCCO or CHINOOK series of lasers manufactured by EOLITE; the PYROFLEX series of lasers manufactured by PYROPHOTONICS; the PALADIN Advanced 355, DIAMOND series (e.g., DIAMOND E, G, J-2, J-3, J-5 series), the FLARE NX, MATRIX QS DPSS, MEPHISTO Q, A VIA LX, A VIA NX, RAPID NX, HYPERRAPID NX, RAPID, HELIOS, FIDELITY, MONACO, OPERA, or RAPID FX series of lasers manufactured by COHERENT; the ASCEND, ELEMENT 2, ELEMENT 2 CEP4, EXCELSIOR, EXPLORER, HIPPO, ICEFYRE, NAVIGATOR, QUANTA-RAY, QUASAR, SPIRIT, SPIRIT 1030-100, SPIRIT 1030-70, SPIRIT 515-50, TALON, or VGEN series of lasers manufactured by SPECTRA PHYSICS; the PULSTAR- or FIRESTAR-series lasers manufactured by SYNRAD; the TRUFLOW-series of lasers (e.g., TRUFLOW 2000, 1700, 3000, 3200. 3600, 4000, 5000, 6000, 6000, 8000, 10000, 12000, 15000, 20000), TRUCOAX series of lasers (e.g., TRUCOAX 1000) or the TRUDISK, TRUPULSE, TRUDIODE, TRUFIBER, or TRUMICRO series of lasers, all manufactured by TRUMPF; the FCPA μJEWEL or FEMTOLITE series of lasers manufactured by IMRA AMERICA; the TANGERINE and SATSUMA series lasers (and MIKAN and T-PULSE series oscillators) manufactured by AMPLITUDE SYSTEMES; CL, CLPF, CLPN, CLPNT, CLT, ELM, ELPF, ELPN, ELPP, ELR, ELS, FLPN, FLPNT, FLT, GLPF, GLPN, GLR, HLPN, HLPP, RFL, TLM, TLPN, TLR, ULPN, ULR, VLM, VLPN, YLM, YLPF, YLPN, YLPP, YLR, YLS, FLPM, FLPMT, DLM, BLM, or DLR series of lasers manufactured by IPG PHOTONICS (e.g., including the GPLN-100-M, GPLN-500-QCW, GPLN-500-M, GPLN-500-R, GPLN-2000-S, etc.), or the like or any combination thereof.

### B. First Positioner

The first positioner 106 is arranged, located or otherwise disposed in the beam path 116 and is operative to diffract, reflect, refract, or the like, or any combination thereof, laser pulses that are generated by the laser source 104 (i.e., to "deflect" the laser pulses) so as to deflect or impart movement of the beam path 116 (e.g., relative to the scan lens 112) and, consequently, deflect or impart movement of the beam axis 118 relative to the workpiece 102. Generally, the first positioner 106 is operative to impart movement of the beam axis 118 relative to the workpiece 102 (e.g., along the X-axis (or direction), the Y-axis (or direction), or a combination thereof, within a first scanning range projected onto the workpiece 102 by the scan lens 112). Although not illustrated, the X-axis (or X-direction) will be understood to refer to an axis (or direction) that is orthogonal to the illustrated Y- and Z-axes (or directions).

Generally, and depending upon one or more factors such as the configuration of the first positioner 106, the location of the first positioner 106 along the beam path 116, the beam size of the laser pulses incident upon the first positioner 106, the spot size, etc., the first scanning range may extend, in any of the X- or Y-directions, to a distance that is less than, greater than or equal to 0.01 mm, 0.04 mm, 0.1 mm, 0.5 mm, 1.0 mm. 1.4 mm, 1.5 mm, 1.8 mm, 2 mm, 2.5 mm, 3.0 mm, 3.5 mm, 4.0 mm, 4.2 mm, 5 mm, 10 mm, 25 mm, 50 mm, 60 mm, etc., or between any of these values. A maximum dimension of the first scanning range (e.g., in the X- or Y-directions, or otherwise) may be greater than, equal to or less than a maximum dimension (as measured in the X-Y plane) of a feature (e.g., an opening, a recess, a via, a trench, etc.) to be formed in the workpiece 102.

Generally, the rate (also referred to as a "positioning rate") with which the first positioner 106 is capable of positioning the process spot at any location within the first scanning range (thus moving the beam axis 118) is in a range from 8 kHz (or thereabout) to 250 MHz (or thereabout). This range is also referred to herein as the first positioning bandwidth. For example, the first positioning bandwidth can be greater than, equal to or less than 8 kHz, 10 kHz, 20 kHz, 30 kHz, 40 kHz, 50 kHz, 75 kHz, 80 kHz, 100 kHz, 250 kHz, 500 kHz, 750 kHz, 1 MHz, 5 MHz, 10 MHz, 20 MHz, 40 MHz, 50 MHz, 75 MHz, 100 MHz, 125 MHz, 150 MHz, 175 MHz, 200 MHz, 225 MHz, 250 MHz, etc., or between any of these values. The inverse of the positioning rate is herein referred to as the "positioning period," and refers to the minimum amount of time necessary to change the position the process spot from one location within the first scanning range to any other location within the first scanning range. Thus, the first positioner 106 can be characterized as having a positioning period that is greater than, equal to or less than 200 μs, 125 μs, 100 μs, 50 μs, 33 μs, 12.5 μs, 10 μs, 4 μs, 2 μs, 1.3 μs, 1 μs, 0.2 μs, 0.1 μs, 0.05 μs, 0.025 μs, 0.02 μs, 0.013 μs, 0.01 μs, 0.008 μs, 0.0067 μs, 0.0057 μs, 0.0044 μs, 0.004 μs, etc., or between any of these values.

The first positioner 106 can be provided as a micro-electro-mechanical-system (MEMS) mirror or mirror array, an AOD system, an electro-optic deflector (EOD) system, a fast-steering mirror (FSM) element (e.g., incorporating a piezoelectric actuator, electrostrictive actuator, voice-coil actuator, etc.), a galvanometer mirror system, a rotating polygon scanner, or the like or any combination thereof. In one embodiment, the first positioner 106 is provided as an AOD system including at least one (e.g., one, two, three, four, etc.) single-element AOD system, at least one (e.g., one, two, three, four, etc.) phased-array AOD system, or the like or any combination thereof. Single-element and phased-array AOD systems each include an AO cell formed of a material such as crystalline Ge, $PbMoO_4$, or $TeO_2$, glassy $SiO_2$, quartz, $As_2S_3$, etc. As used herein, a "single-element" AOD system refers to an AOD system having only a single ultrasonic transducer element acoustically coupled to the AO cell, whereas a "phased-array" AOD system includes a phased-array of at least two ultrasonic transducer elements acoustically coupled to a common AO cell.

As will be recognized by those of ordinary skill, AO technologies (e.g., AODs, AOMs, etc.) utilize diffraction effects caused by acoustic waves propagating through the AO cell to modulate one or more characteristics of an optical wave (i.e., a beam of laser energy, in the context of the present application) contemporaneously propagating through the AO cell. Typically the AO cell is capable of supporting both the acoustic wave and the optical wave in the same region. The acoustic wave imparts a perturbation to the index of refraction in the AO cell. Acoustic waves are typically launched into the AO cell by driving the ultrasonic transducer element at one or more RF frequencies. By controlling characteristics of the acoustic wave (e.g., amplitude, frequency, phase, etc.) one or more characteristics of the propagating optic wave may be controllably modulated to impart movement of the beam path 116 (e.g., relative to the scan lens 112). It should also be recognized that characteristics of an acoustic wave launched into an AO cell can be controlled using well-known techniques to attenuate the energy in a beam of laser energy as it transits the AO cell. Accordingly, an AOD system can also be operated to modulate the pulse energy (and, correspondingly, the fluence, peak power, optical intensity, average power, etc.) of laser pulses ultimately delivered to the workpiece 102.

Any of the AOD systems may be provided as single-axis AOD system (e.g., operative to impart movement of the beam axis 118 along a single direction) or as a multi-axis AOD system (e.g., operative to impart movement of the beam axis 118 along one or more axes, e.g., along the X-axis, along the Y- axis, or any combination thereof) by deflecting the beam path 116. Generally, a multi-axis AOD system can be provided as a multi-cell system or a single-cell system. A multi-cell, multi-axis system typically includes multiple AOD systems, each operative to impart movement of the beam axis 118 along a different axis. For example, a multi-cell, multi-axis system can include a first AOD system (e.g., a single-element or phased-array AOD system) operative to impart movement of the beam axis 118 along the X-axis (e.g., an "X-axis AOD system"), and a second AOD system (e.g., a single-element or phased-array AOD system) operative to impart movement of the beam axis 118 along the Y- axis (e.g., a "Y-axis AOD system"). A single-cell, multi-axis system (e.g., an "X/Y-axis AOD system") typically includes a single AOD system operative to impart movement of the beam axis 118 along the X- and Y- axis. For example, a single-cell system can include at least two ultrasonic transducer elements acoustically coupled to orthogonally-arranged planes, facets, sides, etc., of a common AO cell.

C. Second Positioner

The second positioner 108 is disposed in the beam path 116 and is operative to diffract, reflect, refract, or the like or any combination thereof, laser pulses that are generated by the laser source 104 and passed by the first positioner 106 (i.e., to "deflect" the laser pulses) so as to deflect or impart movement beam path 116 (e.g., relative to the scan lens 112) and, consequently, deflect or impart movement of the beam axis 118 relative to the workpiece 102. Generally, the second positioner 108 is operative to impart movement of the beam axis 118 relative to the workpiece 102 (e.g., along the X-axis (or direction), the Y-axis (or direction), or a combination thereof, within a second scanning range projected onto the workpiece 102 by the scan lens 112).

Generally, and depending upon one or more factors such as the configuration of the second positioner 108, the location of the second positioner 108 along the beam path 116, the beam size of the laser pulses incident upon the second positioner 108, the spot size, etc., the second scanning range may extend, in any of the X- or Y-directions to a distance that is greater than a corresponding distance of the first scanning range. In view of the above, the second scanning range may extend, in any of the X- or Y-directions, to a distance that is less than, greater than or equal to 1 mm, 25 mm, 50 mm, 75 mm, 100 mm, 250 mm, 500 mm, 750 mm, 1 cm, 25 cm, 50 cm, 75 cm, 1 m, 1.25 m, 1.5 m, etc., or between any of these values. A maximum dimension of the second scanning range (e.g., in the X- or Y-directions, or otherwise) may be greater than, equal to or less than a maximum dimension (as measured in the X-Y plane) of a feature (e.g., an opening, a recess, a via, a trench, a scribe line, a conductive trace, etc.) to be formed in the workpiece 102.

In view of the configuration described herein, it should be recognized that movement of the beam axis 118 imparted by the first positioner 106 can be superimposed by movement of the beam axis 118 imparted by the second positioner 108. Thus, the second positioner 108 is operative to scan the first scanning range within the second scanning range.

Generally, the positioning rate with which the second positioner 108 is capable of positioning the process spot at any location within the second scanning range (thus moving the beam axis 118 within the second scanning range and/or scanning the first scanning range within the second scanning range) spans a range (also referred to herein as the "second positioning bandwidth") that is less than the first positioning bandwidth. In one embodiment, the second positioning bandwidth is in a range from 500 Hz (or thereabout) to 8 kHz (or thereabout). For example, the second positioning bandwidth can be greater than, equal to or less than 500 Hz, 750 Hz, 1 kHz, 1.25 kHz, 1.5 kHz, 1.75 kHz, 2 kHz, 2.5 kHz, 3 kHz, 3.5 kHz, 4 kHz, 4.5 kHz, 5 kHz, 5.5 kHz, 6 kHz, 6.5 kHz, 7 kHz, 7.5 kHz, 8 kHz, etc., or between any of these values.

In view of the above, it should be appreciated that the second positioner 108 can be provided as a micro-electro-mechanical-system (MEMS) mirror or mirror array, an AOD system, an electro-optic deflector (EOD) system, a fast-steering mirror (FSM) element (e.g., incorporating a piezoelectric actuator, electrostrictive actuator, voice-coil actuator, etc.), a galvanometer mirror system, a resonant scanning mirror system, rotating polygon scanner, or the like or any combination thereof. In one embodiment, the second positioner 108 can be provided as a galvanometer mirror system including two galvanometer mirror components, i.e., a first galvanometer mirror component (e.g., an X-axis galvanometer mirror component) arranged to impart movement of the beam axis 118 relative to the workpiece 102 along the X-axis and a second galvanometer mirror component (e.g., a Y-axis galvanometer mirror component) arranged to impart movement of the beam axis 118 relative to the workpiece 102 along the Y-axis. In another embodiment, however, the second positioner 108 may be provided as a galvanometer mirror system including a single galvanometer mirror component arranged to impart movement of the beam axis 118 relative to the workpiece 102 along the X- and Y- axes. In yet other embodiments, the second positioner 108 may be provided as a rotating polygon mirror system, etc. It will thus be appreciated that, depending on the specific configuration of the second positioner 108 and the first positioner 106, the second positioning bandwidth may be greater than or equal to the first positioning bandwidth.

D. Third Positioner

The third positioner 110 is operative to impart movement of the workpiece 102 relative to the scan lens 112, and, consequently, impart movement of the workpiece 102 relative to the beam axis 118. Movement of the workpiece 102 relative to the beam axis 118 is generally limited such that the process spot can be scanned, moved or otherwise positioned within a third scan field or "third scanning range." Depending upon one or more factors such as the configuration of the third positioner 110, the third scanning range may extend, in any of the X- or Y-directions to a distance that is greater than or equal to a corresponding distance of the second scanning range. Generally, however, a maximum dimension of the third scanning range (e.g., in the X- or Y-directions, or otherwise) will be greater than or equal to a corresponding maximum dimension (as measured in the X-Y plane) of any feature to be formed in the workpiece 102. Optionally, the third positioner 110 may be operative to move the workpiece 102 relative to the beam axis 118 within a scanning range that extends in the Z-direction (e.g., over a range between 1 mm and 50 mm). Thus, the third scanning range may extend along the X-, Y- and/or Z-directions.

In view of the configuration described herein, it should be recognized that movement of the process spot relative to the workpiece 102 (e.g., as imparted by the first positioner 106 and/or the second positioner 108) can be superimposed by movement of the workpiece 102 as imparted by the third positioner 110. Thus, the third positioner 110 is operative to scan the first scanning range and/or second scanning range within the third scanning range. Generally, the positioning rate with which the third positioner 110 is capable of positioning the workpiece 102 at any location within the third scanning range (thus moving the workpiece 102, scanning the first scanning range within the third scanning range, and/or scanning the second scanning range within the third scanning range) spans a range (also referred to herein as the "third positioning bandwidth") that is less than the second positioning bandwidth. In one embodiment, the third positioning bandwidth is less than 500 Hz (or thereabout). For example, the third positioning bandwidth can be equal to or less than 500 Hz, 250 Hz, 150 Hz, 100 Hz, 75 Hz, 50 Hz, 25 Hz, 10 Hz, 7.5 Hz, 5 Hz, 2.5 Hz, 2 Hz, 1.5 Hz, 1 Hz, etc., or between any of these values.

In one embodiment, the third positioner 110 is provided as one or more linear stages (e.g., each capable of imparting translational movement to the workpiece 102 along the X-, Y-and/or Z-directions), one or more rotational stages (e.g., each capable of imparting rotational movement to the workpiece 102 about an axis parallel to the X-, Y- and/or Z-directions), or the like or any combination thereof. In one embodiment, the third positioner 110 includes an X-stage for moving the workpiece 102 along the X-direction, and a Y-stage supported by the X-stage (and, thus, moveable along the X-direction by the X-stage) for moving the workpiece 102 along the Y-direction.

Although not shown, the apparatus 100 may, optionally, include a fixture (e.g., a chuck) coupled to a stage of the third positioner 110. The fixture can include a support region and the workpiece 102 can be mechanically clamped, fixed, held, secured to the fixture or be otherwise supported by the fixture within the support region. In one embodiment, the workpiece 102 can be clamped, fixed, held, secured or be otherwise supported so as to directly contact a main, typically flat, support surface of the fixture. In another embodiment, the workpiece 102 can be clamped, fixed, held, secured or be otherwise supported so as to be spaced apart from the support surface of the fixture. In one embodiment, the workpiece 102 can be fixed, held, or secured by way of a force (e.g., an electrostatic force, a vacuum force, a magnetic force) selectively applied to the workpiece 102 from the fixture, or otherwise present between the workpiece 102 and the fixture.

As described thus far, the apparatus 100 employs a so-called "stacked" positioning system as the third positioner 110, which enables the workpiece 102 to be moved while positions of other components such as the first positioner 106, second positioner 108, scan lens 112, etc., are kept stationary within the apparatus 100 (e.g., via one or more supports, frames, etc., as is known in the art) relative to the workpiece 102. In another embodiment, the third positioner 110 may be arranged and operative to move one or more components such as the first positioner 106, second positioner 108, scan lens 112, etc., and the workpiece 102 may be kept stationary.

In yet another embodiment, the third positioner 110 can be provided as a so-called "split-stage" positioning system in which one or more components such as the first positioner 106, second positioner 108, scan lens 112, or the like or any combination thereof, are carried by one or more linear or rotational stages (e.g., mounted on a frame, gantry, etc.) and the workpiece 102 is carried by one or more other linear or rotational stages. In such an embodiment, the third positioner 110 includes one or more linear or rotational stages arranged and operative to move one or more components such as the second positioner 108 and scan lens 112, and one or more linear or rotational stages arranged and operative to move the workpiece 102. For example, the third positioner 110 may include a Y-stage for imparting movement of the workpiece 102 along the Y-direction and an X-stage for imparting movement of the scan head along the X-direction. Some examples of split-stage positioning systems that may be beneficially or advantageously employed in the apparatus 100 include any of those disclosed in U.S. Patent Nos. 5,751,585, 5,798,927, 5,847,960, 6,606,999, 7,605,343, 8,680,430, 8,847,113, or in U.S. Patent App. Pub. No. 2014/0083983, or any combination thereof.

In one embodiment in which the third positioner 110 includes a Z-stage, the Z-stage may be arranged and configured to move the workpiece 102 along the Z-direction. In this case, the Z-stage may be carried by one or more of the other aforementioned stages for moving or positioning the workpiece 102, may carry one or more of the other aforementioned stages for moving or positioning the workpiece 102, or any combination thereof. In another embodiment in which the third positioner 110 includes a Z-stage, the Z-stage may be arranged and configured to move the scan lens 112 along the Z-direction. Thus, in the case where the third positioner 110 is provided as a split-stage positioning system, the Z-stage may carry, or be carried by, the X-stage. Moving the workpiece 102 or the scan lens 112 along the Z-direction can result in a change in spot size at the workpiece 102.

In still another embodiment, one or more components such as the first positioner 106, second positioner 108, scan lens 112, etc., may be carried by an articulated, multi-axis robotic arm (e.g., a 2-, 3-, 4-, 5-, or 6-axis arm). In such an embodiment, the second positioner 108 and/or scan lens 112 may, optionally, be carried by an end effector of the robotic arm. In yet another embodiment, the workpiece 102 may be carried directly on an end effector of an articulated, multi-axis robotic arm (i.e., without the third positioner 110). In still another embodiment, the third positioner 110 may be carried on an end effector of an articulated, multi-axis robotic arm.

### D. Scan Lens

The scan lens 112 (e.g., provided as either a simple lens, or a compound lens) is generally configured to focus laser pulses directed along the beam path, typically so as to produce a beam waist that can be positioned at or near the desired process spot. The scan lens 112 may be provided as an f-theta lens, a telecentric lens, an axicon lens (in which case, a series of beam waists are produced, yielding a plurality of process spots displaced from one another along the beam axis 118), or the like or any combination thereof. In one embodiment, the scan lens 112 is provided as a fixed-focal length lens and is coupled to a scan lens positioner (e.g., a lens actuator, not shown) operative to move the scan lens 112 (e.g., so as to change the position of the beam waist along the beam axis 118). For example, the lens actuator may be provided as a voice coil operative to linearly translate the scan lens 112 along the Z-direction. In this case, the scan lens 112 may be formed of a material such as fused silica, optical glass, zinc selenide, zinc sulfide, germanium, gallium arsenide, magnesium fluoride, etc. In another embodiment, the scan lens 112 is provided as a variable-focal length lens (e.g., a zoom lens, or a so-called "liquid lens" incorporating technologies currently offered by COGNEX, VARIOPTIC, etc.) capable of being actuated (e.g., via a lens actuator) to change the position of the beam waist along the beam axis 118. Changing the position of the beam waist along the beam axis 118 can result in a change in spot size at the workpiece 102.

In one embodiment, the scan lens 112 and the second positioner 108 are integrated into a common housing or "scan head." Thus, in an embodiment in which the apparatus 100 includes a lens actuator, the lens actuator may be coupled to the scan lens 112 (e.g., so as to enable movement of the scan lens 112 within the scan head, relative to the second positioner 108). Alternatively, the lens actuator may be coupled to the scan head (e.g., so as to enable movement of the scan head itself, in which case the scan lens 112 and the second positioner 108 would move together). In another embodiment, the scan lens 112 and the second positioner 108 are integrated into different housings (e.g., such that the housing in which the scan lens 112 is integrated is movable relative to the housing in which the second positioner 108 is integrated). Components of the scan head, or the entire scan head itself, may be of a modular assembly, such that a component of the scan head can be simply removed and replaced with another component, such that one scan head can be simply removed and replaced with another scan head, etc.

### E. Vision

The apparatus 100 may further include one or more cameras, such as camera 113 (e.g., a CCD camera, a CMOS camera, or the like or any combination thereof), having a field of view that encompasses a region occupied by the workpiece 102 provided to the apparatus 100 for processing. The camera 113 may be coupled to the scan lens 112 or to the aforementioned scan head. In another embodiment, if the third positioner 110 is provided as a split-stage positioning system, the camera 113 may be coupled to any stage arranged and operative to move the scan lens 112 or scan head (instead of to the scan lens 112 or scan head itself). In yet another embodiment, the apparatus 100 may include a structure such as a frame, a gantry, etc. (generically referred to herein as an "inspection support"), and the camera 113 may be coupled to the inspection support. In this embodiment, apparatus 100 may include one or more linear or rotational stages to move the inspection support (e.g., relative to the workpiece 102), to move the camera 113 (e.g., relative to the inspection support), or the like or any combination thereof. The camera 113 can generate image data representative of imagery captured within its field of view and output the image data (e.g., as one or more image signals) to the controller 114.

Image data can be interpreted, manipulated, inputted to an algorithm or otherwise processed (e.g., at the controller 114, a remote system 126, or the like or any combination thereof) in any desired or otherwise suitable manner known in the art to facilitate one or more operations such as alignment of the workpiece 102 within the apparatus 100, calibration, visual inspection (e.g., of features formed as a result of processing the workpiece 102), or the like or any combination thereof. To the extent that image data is used to facilitate an inspection process (e.g., a visual inspection process), any camera (e.g., camera 113) that generated the image data can be considered to be a part of an "inspection system." Hence, an inspection system can include a single camera, or multiple cameras.

Although FIG. 1 illustrates the apparatus 100 as including only one camera 113, it will be appreciated that multiple cameras 113 (e.g., differing in terms of resolution, field of view, or the like or any combination thereof). For example, in one embodiment, the apparatus 100 may include a first camera and a second camera. The first camera may have a relatively large field of view and a relatively low resolution whereas the second camera may have a relatively small field of view and a relatively high resolution. Generally, the field of view of the second camera will be located within the field of view of the first camera. However, the first and second cameras can be arranged such that the field of view of the second camera is located outside the field of view of the first camera. In addition, the camera 113 may have a field of view, as projected onto the workpiece 102, which is larger than the first scanning range or the second scanning range.

Furthermore, and although not illustrated, the apparatus 100 may include an illumination system (e.g., any suitable machine-vision illumination system as known in the art) operative to illuminate the field of view of the camera (e.g., camera 113).

In the illustrated embodiment, the camera 113 is laterally offset from the scan lens 112. Accordingly, the field of view of the camera 113 (i.e., as projected onto the workpiece 102) may be located at least partially outside the scan field projected by the scan lens 112 onto the workpiece 102. In another embodiment, the apparatus 100 may include one or more optical components (e.g., one or more beam splitters, mirrors, lenses, or the like or any combination thereof), in any manner as is known in the art, that enable the field of view of a camera (e.g., camera 113) to be projected through the scan lens 112.

F. Controller

Generally, the apparatus 100 includes one or more controllers, such as controller 114, to control, or facilitate control of, the operation of the apparatus 100. In one embodiment, the controller 114 is communicatively coupled (e.g., over one or more wired or wireless, serial or parallel, communications links, such as USB, RS-232, Ethernet, Firewire, Wi-Fi, RFID, NFC, Bluetooth, Li-Fi, SERCOS, MARCO, EtherCAT, or the like or any combination thereof) to one or more components of the apparatus 100, such as the laser source 104, the first positioner 106, the second positioner 108, third positioner 110, the lens actuator, the scan lens 112 (when provided as a variable-focal length lens), the fixture, the camera 113, the VOA, the beam size adjustment mechanism, etc., which are thus operative in response to one or more control signals output by the controller 114.

For example, the controller 114 may control an operation of the first positioner 106, second positioner 108, or third positioner 110, to impart relative movement between the beam axis and the workpiece 102 so as to cause relative movement between the process spot and the workpiece 102 along a path or trajectory (also referred to herein as a "process trajectory") within the workpiece 102. In another example, and as will be described in greater detail below, the controller 114 may control an operation of the third positioner 110 to impart relative movement between the camera 113 and the workpiece 102 after the workpiece 102 has been processed to enable inspection of features formed in the workpiece 102 as a result of the processing.

Generally, the controller 114 includes one or more processors operative to generate the aforementioned control signals upon executing instructions. A processor can be provided as a programmable processor (e.g., including one or more general purpose computer processors, microprocessors, digital signal processors, or the like or any combination thereof) operative to execute the instructions. Instructions executable by the processor(s) may be implemented software, firmware, etc., or in any suitable form of circuitry including programmable logic devices (PLDs), field-programmable gate arrays (FPGAs), field-programmable object arrays (FPOAs), application-specific integrated circuits (ASICs) - including digital, analog and mixed analog/digital circuitry - or the like, or any combination thereof. Execution of instructions can be performed on one processor, distributed among processors, made parallel across processors within a device or across a network of devices, or the like or any combination thereof.

In one embodiment, the controller 114 includes tangible media such as computer memory, which is accessible (e.g., via one or more wired or wireless communications links) by the processor. As used herein, "computer memory" includes magnetic media (e.g., magnetic tape, hard disk drive, etc.), optical discs, volatile or non-volatile semiconductor memory (e.g., RAM, ROM, NAND-type flash memory, NOR-type flash memory, SONOS memory, etc.), etc., and may be accessed locally, remotely (e.g., across a network), or a combination thereof. Generally, the instructions may be stored as computer software (e.g., executable code, files, instructions, etc., library files, etc.), which can be readily authored by artisans, from the descriptions provided herein, e.g., written in C, C++, Visual Basic, Java, Python, Tel, Perl, Scheme, Ruby, assembly language, hardware description language (e.g., VHDL, VERILOG, etc.), etc. Computer software is commonly stored in one or more data structures conveyed by computer memory.

Although not shown, one or more drivers (e.g., RF drivers, servo drivers, line drivers, power sources, etc.) can be communicatively coupled to an input of one or more components such as the laser source 104, the first positioner 106, the second positioner 108, the third positioner 110, the lens actuator, the scan lens 112 (when provided as a variable-focal length lens), the fixture, the camera 113, the VOA, the beam size adjustment mechanism, etc. In one embodiment, each driver typically includes an input to which the controller 114 is communicatively coupled and the controller 114 is thus operative to generate one or more control signals (e.g., trigger signals, etc.), which can be transmitted to the input(s) of one or more drivers associated with one or more components of the apparatus 100. Thus, components such as the laser source 104, first positioner 106, second positioner 108, third positioner 110, lens actuator, the scan lens 112 (when provided as a variable-focal length lens), fixture, camera 113, the VOA, the beam size adjustment mechanism, etc., are responsive to control signals generated by the controller 114.

In another embodiment, and although not shown, one or more additional controllers (e.g., component-specific controllers) may, optionally, be communicatively coupled to an input of a driver communicatively coupled to a component (and thus associated with the component) such as the laser source 104, the first positioner 106, the second positioner 108, the third positioner 110, the lens actuator, the scan lens 112 (when provided as a variable-focal length lens), the fixture, the camera 113, the VOA, the beam size adjustment mechanism, etc. In this embodiment, each component-specific controller can be communicatively coupled and the controller 114 and be operative to generate, in response to one or more control signals received from the controller 114, one or more control signals (e.g., trigger signals, etc.), which can then be transmitted to the input(s) of the driver(s) to which it is communicatively coupled. In this embodiment, a component-specific controller may be operative as similarly described with respect to the controller 114.

In another embodiment in which one or more component-specific controllers are provided, the component-specific controller associated with one component (e.g., the laser source 104) can be communicatively coupled to the component-specific controller associated with one component (e.g., the first positioner 106, etc.). In this embodiment, one or more of the component-specific controllers can be operative to generate one or more control signals (e.g., trigger signals, etc.) in response to one or more control signals received from one or more other component-specific controllers.

## G. User Interface

The apparatus 100 may further include a user interface 120 communicatively coupled to the controller 114 (e.g., over one or more wired or wireless, serial or parallel, communications links, such as USB, RS-232, Ethernet, Firewire, Wi-Fi, RFID, NFC, Bluetooth, Li-Fi, SERCOS, MARCO, EtherCAT, or the like or any combination thereof). The user interface 120 can include one or more output devices, one or more input devices, or any combination thereof. Generally, an output device is any device capable of rendering or otherwise conveying information through any human-perceptible stimuli (e.g., visual, audible, tactile, etc.). Examples of output devices include monitor, a printer, a speaker, a haptic actuator, and the like. Generally, an input device is any device that enables, e.g., a user of the apparatus 100, to provide instructions, commands, parameters, information, or the like, to operate the apparatus 100 (or to facilitate operation of the apparatus 100). Examples of input devices include a keyboard, mouse, touchpad, touchscreen, microphone, a camera, and the like.

## H. Communications Module

Optionally, the apparatus 100 includes a communications module 122 communicatively coupled to the controller 114 (e.g., over one or more wired or wireless, serial or parallel, communications links, such as USB, RS-232, Ethernet, Firewire, Wi-Fi, RFID, NFC, Bluetooth, Li-Fi, SERCOS, MARCO, EtherCAT, or the like or any combination thereof). The communications module 122 is operative to transmit data, receive data, or a combination thereof. Accordingly, the communications module 122 can include circuitry, antennas, connectors, or the like or any combination thereof, to transmit and/or receive data through a wired or wireless link to another device or network (e.g., network 124). In one example, the communications module 122 can be a connector that operates in conjunction with software or firmware in the controller 114 to function as a serial port (e.g., RS232), a Universal Serial Bus (USB) port, an IR interface or the like or any combination thereof. In another example, the communications module 122 can be a universal interface driver application specific integrated circuit (UIDA) that supports plural different host interface protocols, such as RS-232C, IBM46XX, Keyboard Wedge interface, or the like or any combination thereof. The communications module 122 may include one or more modules, circuits, antennas, connectors, or the like, as known in the art, to support other known communication modes, such as USB, Ethernet, Bluetooth, wifi, infrared (e.g., IrDa), RFID communication, or the like or any combination thereof. Instead of being a separate component from the controller 114, it will be appreciated that the communications module 122 may be incorporated as part of the controller 114 in any known or suitable manner.

The network 124 may be communicatively coupled (e.g., over one or more wired or wireless, serial or parallel, communications links, such as USB, RS-232, Ethernet, Firewire, Wi-Fi, RFID, NFC, Bluetooth, Li-Fi, SERCOS, MARCO, EtherCAT, or the like or any combination thereof) to one or more systems remote to the apparatus 100 (e.g., remote system 126, as identified in FIG. 1). In one embodiment, the remote system 126 may be a device such as a computer (e.g., a desktop computer, a laptop computer, a tablet computer, a smartphone, etc.), a computing system (e.g., a cloud computing platform), another controller or communications module (e.g., associated with another apparatus such as apparatus 100), or the like or any combination thereof. It should be appreciated that the remote system 126 may include, or otherwise be coupled to, a user interface that includes one or more output devices, one or more input devices, or any combination thereof, as exemplarily described above with respect to the user interface 120. The remote system 126 can be a device owned or otherwise operated by a user of the apparatus 100, by a manufacturer of the apparatus 100, by a technician responsible for performing maintenance on the apparatus 100, or the like or any combination thereof.

Through the communications module 122 and network 124, the controller 114 may communicate various data to the remote system 126. Examples of data that can thus be output to the remote system 126 include the aforementioned image data, or measurement data (discussed in greater detail below), or the like or any combination thereof. Data output by the remote system 126 may be input to the controller 114 (e.g., via the network 124 and communications module 122) and represent instructions, commands, parameters, information, or the like, to operate the apparatus 100 or to otherwise influence or facilitate any operation of the apparatus 100.

### I. Beam Characterization Tool

Optionally, the apparatus 100 includes one or more beam characterization tools, such as beam characterization tool 128, operative to measure one or more characteristics of the beam of laser energy. Examples of characteristics that can be measured at the beam characterization tool 128 include spatial energy distribution, phase, polarization, power, or the like or any combination thereof, of a spot illuminated at the beam characterization tool 128 by the incident beam of laser energy. Accordingly, the beam characterization tool 128 can be provided as at least one sensor selected from the group consisting of a slit sensor, a knife-edge sensor, a camera (e.g., CCD, CMOS, etc.), a wavefront sensor (e.g., a Shack-Hartmann wavefront sensor, etc.), or any other laser beam profiler known in the art, or the like or any combination thereof. The beam characterization tool 128 can generate measurement data representative of one or more of the measured beam characteristics and output the measurement data (e.g., as one or more measurement signals) to the controller 114. Optionally, the measurement data (or data derived from the measurement data, e.g., by the controller 114) can be transmitted from the controller 114 to the remote system 126 (e.g., via the communications module 122 and network 124).

As schematically shown in FIG. 1, the beam characterization tool 128 can be configured and arranged to measure one or more characteristics of the beam of laser energy (each also generically referred to herein as a "beam characteristic") in any manner known in the art. For example, the beam characterization tool 128 is arranged to measure one or more characteristics of the beam of laser energy (e.g., as indicated by arrow 128a) at or near a location where the workpiece 102 will be processed by the beam of laser energy (also referred to herein as a "process region"), from a location (i.e., a sampling location) along the beam path 116, or any combination thereof. In one embodiment, the sampling location can be between the second positioner 108 and the scan lens 112 (e.g., as indicated by arrow 128b), between the first positioner 106 and the second positioner 108, between the laser source 104 and the first positioner 106, or the like.

In another embodiment, the camera 113 (e.g., the first camera, the second camera, or the like or any combination thereof) can be operated to capture imagery of the spot at the workpiece 102, at the fixture, at an area outside the fixture, or the like or any combination thereof. Thereafter, in one implementation, the captured imagery can thereafter be processed at the camera 113 so that the image data generated by the camera 113 represents the spatial energy distribution of the spot. In this case, the image data output by the camera 113 can be considered "measurement data," and the camera 113 can be considered to be an embodiment of the beam characterization tool 128.

### J. Laser Sensor System

In one embodiment, the apparatus 100 includes a laser sensor system configured to measure laser energy or power. For example, the laser sensor system may be attached to the chuck and be configured to measure laser energy or power in the beam of laser energy delivered from the scan lens 112. In another example, the apparatus 100 may include one or more optical components such as a beam splitter arranged in the beam path 116 and configured to divert a portion of the laser energy propagating along the beam path 116 to the laser sensor system. In this example, the laser sensor system may be configured to measure laser energy or power in the diverted portion of the laser energy. Measurement data generated by the laser sensor system (e.g., in response to measuring the laser energy or power) is output to the controller 114 (and, optionally, to the remote system 126), where it can be processed to support various operations such as real-time pulse energy control (e.g., to compensate for changes in laser power), system calibrations (e.g., to compensate for transmission changes in the AOD systems of the first positioner 106 vs. RF power and frequency, etc.), or the like or any combination thereof. Examples of operations that may be implemented using measurement data from the laser sensor system are discussed in aforementioned U.S. Patent No. 7,244,906, or in aforementioned U.S. Patent App. Pub. Nos. 2014/0196140, 2014/0263201 or 2014/0263223, or in International Patent Pub. No. WO 2019/236616, or the like or any combination thereof.

III. Discussion Concerning Data and Information, Generally

Measurement data that has been generated (e.g., as discussed above) can be processed (e.g., in an automated manner at the controller 114, at the remote system 126, or the like or any combination thereof) to estimate, derive, discern or otherwise obtain one or more spatial characteristics of the beam of laser energy, one or more energy characteristics of the beam of laser energy, or the like or any combination thereof.

Examples of spatial characteristics, which can be measured, can include spatial energy distribution, spatial phase distribution, spatial polarization distribution, spot size, spot size, spot shape, spot shape, spot orientation, spot centroid, spot quality (e.g., as represented by the $M^2$ parameter, as is known in the art), or the like or any combination thereof. Spot shape may be measured, calculated, estimated or otherwise determined using any known or suitable technique (e.g., such as any known technique for calculating circularity, roundness, etc.). For example, circularity may be determined according to the following formula:

$$C = \frac{4\pi A}{P^2}$$

where C is the circularity of the spot illuminated by the beam of laser energy, A is the area of the spot, and P is the perimeter of the area of the spot.

Examples of energy characteristics can include spot fluence, pulse energy (i.e., when the beam of laser energy includes one or more pulses of laser energy), average power, peak power, or the like or any combination thereof. In some embodiments, data representing one or more of the aforementioned characteristics such as pulse energy (i.e., when the beam of laser energy includes one or more pulses of laser energy), average power, peak power, etc., or the like or any combination thereof, may be used to facilitate determination of an energy characteristic such as spot fluence. Data representing one or more other characteristics such as pulse duration or pulse repetition frequency (i.e., when the beam of laser energy includes one or more pulses of laser energy), etc., may also be used to facilitate determination of one or more energy characteristics. If not generated as measurement data, such data may be input to the controller 114 (e.g., via the user interface 120, the communications module 122, etc.), or otherwise be accessible to, the controller 114, the remote system 126, or the like or any combination thereof.

Measurement data can be generated periodically, continuously (e.g., over a period of time, e.g., while the workpiece 102 is being processed), or before or after an event occurs, or any combination thereof. Examples of events that can trigger generation of measurement data include initiation of the processing of a workpiece 102, completion of the processing one or more workpieces 102, operation of the apparatus 100 for a predetermined amount of time, operation of the laser source 104 for a predetermined amount of time, or the like or any combination thereof. Another example of an event that can trigger generation of measurement data can include the receipt of an instruction to measure one or more beam characteristics (e.g., input via the user interface 120, the remote system 126, or the like or any combination thereof).

Once estimated, derived, discerned or otherwise obtained from the measurement data, data representing one or more spatial or energy characteristics (generically referred to herein as "spot data") can be interpreted, manipulated, inputted to an algorithm or otherwise processed (e.g., in an automated manner at the controller 114, the remote system 126, or the like or any combination thereof) to support one or more operations.

Measurement data, spot data, or any other data (e.g., data representing pulse duration or pulse repetition frequency, data generated or otherwise obtained upon performing a test or inspection operation after the workpiece 102 has been processed, data representing one or more other characteristics of the apparatus 100, such as debris nozzle vacuum or air pressure and flow, vacuum pressure at the fixture, position sensor feedback associated with the second positioner 108 and/or third positioner 110, temperature and/or humidity within the process bay (generally, the process bay is, the space in which the workpiece 102 is arranged during processing), or the like or any combination thereof. Other data representing the temperature and/or humidity within the ambient environment surrounding the apparatus 100, or the like or any combination thereof, may also be stored. It will be appreciated that data representing temperature and/or humidity within the process bay, temperature and/or humidity within the ambient environment, etc., can be generated by one or more known types of temperature sensors, humidity sensors, or the like. Such sensors are generically illustrated in FIG. 1 at 130. Other data that may be stored includes data representing feedback signals associated with one or more positioners (e.g., the second positioner 108, the third positioner 110, or the like or any combination thereof). Still other data may be derived from the measurement data, spot data or any of the aforementioned data (e.g., by processing such data at the controller 114, at the remote system 126, or the like or any combination thereof) and may also be stored. Examples of such derived data include a total amount of laser energy delivered during the formation of a feature, a pulse-averaged amount of laser energy (i.e., total amount of laser energy delivered during the formation of a feature divided by the number of pulses delivered during the formation of a feature) delivered during the formation of a feature, an n-pulse moving-average amount of laser energy (i.e., a moving average of the amount of laser energy delivered during the formation of a feature divided by the "n" number of pulses, where "n" can be set by the user, or is otherwise predetermined), and the like. Other examples of derived data indicating the presence of a positioning error (e.g., as imparted by a positioner such as the second positioner 108), a magnitude of the positioning error, or the like or any combination thereof, which may be derived from the feedback signals associated with the positioner. All of such stored data can be generically referred to as "process control data."

Process control data can also include data representing one or more measured characteristics of the workpiece 102 (e.g., either prior to being processed, during processing, or after being processed, or any combination thereof). Examples of such as data can include data representing measured characteristics such as the thickness of one or more constituent structures of the workpiece 102 or of the workpiece in entirety, surface quality (e.g., a characterization of any surface imperfections such as scratches, pits. etc.) of the workpiece 102, reflectivity of the workpiece 102, temperature of the workpiece 102, distance from the scan lens 112 (or scan head) to the workpiece 102, or the like or any combination thereof. These characteristics can be measured at a region in the workpiece 102 before a feature is formed at that region, while a feature is being formed at the region, or after a feature has been formed at that region, or any combination thereof. Examples of sensors known in that art that could be used to generate this process control data include a camera (e.g., with various illumination methods), a laser displacement sensor, a confocal laser sensor, an interferometers, an inductive coating thickness gauge, a stylus profilometer, a touch probe, or the like or any combination thereof. Such sensors are also generically illustrated in FIG. 1 at 130.

Generally, a test or inspection operation can be performed by an automated optical inspection (AOI) system, an automated X-ray inspection (AXI) system, an in-circuit test (ICT) system, a wafer probe system, etc. In one embodiment, a visual inspection of the workpiece 102 can be performed by one or more cameras incorporated into the apparatus 100 (i.e., the aforementioned "inspection system").

Process control data may be stored in association with auxiliary information. Generally, storage of the process control data (in association with auxiliary information) is accomplished using one or more databases, which may reside locally (e.g., on a computer memory of, or otherwise accessible to, the controller 114) or which may be located remote from the apparatus 100 (e.g., on a computer memory of, or otherwise accessible to, the remote system 126), or the like or any combination thereof.

Examples of auxiliary information that can be associated with process control data include information representing the identity of the apparatus 100 (e.g., in terms of serial number, model number, etc.), the identity of the workpiece 102 (e.g., in terms of batch or lot number, serial number, model number, etc.) that is to be (or has been) processed by the apparatus 100, the identity (or location) of each feature that is to be (or has been) formed in the workpiece 102, the date and/or time the process control was generated or otherwise obtained, or the like or any combination thereof. For example, process control data (e.g., data representing laser energy, peak power, average power, pulse repetition rate, spot size, or the like or any combination thereof) obtained from measurement data generated when a first feature was formed during processing of a workpiece 102 can be associated with auxiliary information that uniquely identifies the first feature (or a location of the first feature in the workpiece 102), process control data (e.g., data representing laser energy, peak power, average power, pulse repetition rate, spot size, or the like or any combination thereof) obtained from measurement data generated when a second feature was formed during processing of a workpiece 102 can be associated with auxiliary information that uniquely identifies the second feature (or a location of the second feature in the workpiece 102), and so on. The location of features to be formed in the workpiece 102 can be discerned based on information provided by a user or generated by the apparatus 100 (e.g., a CAD file, or other tool path file describing the process trajectory, or the like or any combination thereof), and any scaling parameters that may be calculated from alignment points captured by one or more cameras (e.g., camera 113).

Auxiliary information may also include "workpiece information," which describes one or more characteristics of the workpiece 102 as it exists prior to being processed, during process, after being processed or any combination thereof. Examples of workpiece information can include the material construction of one or more constituent structures the workpiece 102 in its entirety, lot number, panel number, thickness map, or the like or any combination thereof. Auxiliary information may also include "application information," which describes the manner in which the workpiece 102 is to be (or has been processed), and may describe the type(s) of features to be formed in the workpiece 102, the location of the features to be formed in the workpiece 102, or the like or any combination thereof. Workpiece information and application information may be provided by any suitable method (e.g., by a user interacting with the user interface 120, a remote system 126, or the like or any combination thereof). In some embodiments, workpiece information or application information may be encoded by machine-readable indicia (e.g., one or more markings, which may be captured and discerned by a component of the apparatus 100, such as the camera 113). In other embodiments, the machine-readable indicia may encode a link (e.g., a URL to a network resource containing the workpiece information or application information), which may be captured and discerned by a component of the apparatus 100, such as the camera 113.

Once stored, the process control data can later be interpreted, manipulated, inputted to an algorithm or otherwise processed (e.g., at the controller 114, at the remote system 126, or the like or any combination thereof) to support one or more operations. Example embodiments of such operations are described in greater detail in the sections below entitled "Directed Inspection."

A. Directed Inspection

According to the present invention, after a workpiece 102 has been processed to form a plurality of features therein (e.g., blind-via holes, through-via holes, or a combination thereof), any of the aforementioned process control data is processed (e.g., in connection with any auxiliary information stored in association therewith) to identify features that should be inspected because there is a relatively high likelihood that such features are defective. Generally, this processing (herein referred to as a "candidate feature selection" process) can be performed at the controller 114, at the remote system 126, or the like or any combination thereof. Features that have been identified to be inspected are referred to herein as "candidate features."

After the candidate features have been identified, the third positioner 110 can be operated to cause each candidate feature to be moved into a field of view of the camera 113, and the camera 113 can be operated to capture imagery of each candidate feature located within its field of view. The process of operating the third positioner 110 and the camera 113 to capture imagery of candidate features is herein referred to as "inspection." It will be appreciated that inspecting only candidate features formed in the workpiece 102 requires much less time than inspecting every feature formed in the workpiece 102. It will also be appreciated that inspecting only candidate features instead of randomly sampling features formed in the workpiece will reduce the likelihood that areas of the workpiece 102 containing defective features are missed during inspection.

i. Additional Discussion Concerning Candidate Feature Selection

As mentioned above, a candidate feature selection process is applied to the process control data and any associated auxiliary information to identify candidate features for inspection. In some embodiments, candidate feature selection process applies one or more analysis methods and statistical thresholds (e.g., which may be empirically determined, or identified as a result of computer modelling or simulation), one or more machine learning algorithms, or the like or any combination thereof, to any of the process control data to estimate or determine which of the processed features have a relatively high likelihood of being defective. It will be appreciated that one or more suitable analytical methods and machine learning algorithms known in the art may be implemented to facilitate the candidate feature selection process.

A priori, an experienced process engineer can develop analysis methods and set appropriate thresholds for this candidate feature selection process. However, through the coupling of such process control data, the candidate feature selection process, one or more inspection systems, one or more cameras (e.g., camera 113), or the like or any combination thereof, a learning feedback loop, which is either automated by using a machine learning algorithm or by using manual, off-line statistical correlations by an experienced human, can be created.

The candidate feature selection process can generate, as an output, a data structure (e.g., a list) containing any process control data or auxiliary information of each feature (including the identity or location of each feature within the workpiece 102 or along the processing trajectory) that is estimated or determined as having a relatively high likelihood of being defective. It will be appreciated that the estimated or determined likelihood output for any feature can be stored in association with that feature as auxiliary information, which can be used for later analysis, traceability purposes, or the like or any combination thereof.

Optionally, certain aspects of the candidate feature selection process may tuned based on input from the user (e.g., provided via the user interface 120, the remote system 126, or the like or any combination thereof). For example, a user can specify how many features (e.g., in absolute or relative terms) should be included in the output data structure. In another example, the user can specify that features meeting some estimated or determined criteria for being defective should be included in the output data structure.

a. Example Embodiments Concerning Candidate Feature Selection

In the present invention, a candidate feature selection process is applied to process control data that, at least, represents laser energy (e.g., either in total amounts, averaged amounts, or the like, as discussed above) delivered to the workpiece 102 (e.g., during formation of each feature, during a particular step in forming each feature, or the like or any combination thereof). In this case, statistical thresholds that are used in analyzing the process control data include thresholds such as a maximum positive or negative laser energy deviation (e.g., relative to one or more predetermined setpoints based one or more items associated workpiece information and/or application information). Generally, if the total or average amount of laser energy delivered during formation of a feature (or delivered during a particular step in the process of forming the feature) exceeds a maximum positive laser energy deviation, then it is likely that the feature ultimately formed will be defective because too much laser energy was used to form it. Features (e.g., blind-via holes, trenches, recesses, etc.) that are formed with too much laser energy can be deemed defective because materials exposed to the feature or otherwise near the feature can be undesirably damaged (e.g., melted, ablated, cracked, etc.), or the feature itself may have an undesirable size or shape or have an undesirable taper, overhang, or the like or any combination thereof. Likewise. if the total or average amount of laser energy delivered during formation of a feature (or delivered during a particular step in the process of forming the feature) exceeds a maximum negative laser energy deviation, then it is likely that the feature ultimately formed will be defective because too little laser energy was used to form it. Features (e.g., blind-via holes, through-via holes, trenches, recesses, etc.) that are formed with too little laser energy can be deemed defective because not enough material was removed from the workpiece 102 to form the feature as desired.

### ii. Additional Discussion Concerning Inspection

The location of each candidate feature identified in the output of the candidate feature selection process can be used to control the operation of the third positioner 110 during inspection. In one embodiment, an offset (e.g., in the X- and/or Y-directions) can be applied to each location to compensate for any lateral offset between the scan lens 112 and the field of view of the camera 113, as projected onto the workpiece 102. Generally, operation of the third positioner 110 can be controlled during inspection to cause relative movement between the workpiece 102 and the camera 113 (i.e., the field of view of the camera, as projected onto the workpiece 102) along a path or trajectory (also referred to herein as an "inspection trajectory") that may be computed (e.g., at the controller 114, at the remote system 126, or the like or any combination thereof) based on the output of the candidate feature selection process. In one embodiment, the inspection trajectory used to inspect features formed during processing of the workpiece 102 corresponds to the process trajectory used to form the features during processing of the workpiece 102. In another embodiment, the inspection trajectory does not correspond to the process trajectory used to form the features during processing of the workpiece 102. In this case, the inspection trajectory may represent an optimized path or route that enables the camera 113 to capture imagery of each candidate feature in the processed workpiece 102.

Image data generated by the camera 113 (i.e., representative of imagery captured within its field of view) during inspection is output (e.g., as one or more image signals) to the controller 114 and, thereafter, can be interpreted, manipulated, inputted to an algorithm or otherwise processed (e.g., at the controller 114, at the remote system 126, by a user, or the like or any combination thereof) in any desired or otherwise suitable manner known in the art to determine whether the feature was properly formed (i.e., defective). It will be appreciated that the image data representing captured imagery of any candidate feature can be stored in association with that feature as auxiliary information, which can be used for later analysis, traceability purposes, or the like or any combination thereof.

#### a. Manual Aspects Associated with Directed Inspection and Classification

In one embodiment, the third positioner 110 can be manually operated (e.g., via user interaction through the user interface 120, through the remote system 126, or the like or any combination thereof) to cause each candidate feature to be moved into a field of view of the camera 113, and the camera 113 can be operated (e.g., via user interaction through the user interface 120, through the remote system 126, or the like or any combination thereof) to capture imagery of each candidate feature located within its field of view. Captured imagery can be displayed (e.g., by a monitor of the user interface 120, the remote system 126, or the like or any combination thereof) and the user can manually classify the feature (e.g., via an input device of the user interface 120 or the remote system 126, etc.) associated with the displayed imagery, e.g., as defective or not defective.

#### b. Automated Aspects Associated with Directed Inspection and Classification

In another embodiment, operation of the third positioner 110 and camera 113 can be effected in an automated manner (e.g., by the controller 114, the remote system 126, or the like or any combination thereof) to effect inspection and classification of each candidate feature. In this embodiment, image data generated as a result of inspection can be processed using any suitable image recognition technique to classify an inspected feature, e.g., as defective or not defective. Imagery can be captured while the third positioner 110 is operating to move a candidate feature into the field of view of the camera 113, after operation of the third positioner 110 has settled and a candidate feature is stationary within the field of view of the camera 113, or any combination thereof.

#### c. Semi-Automated Aspects Associated with Directed Inspection and Classification

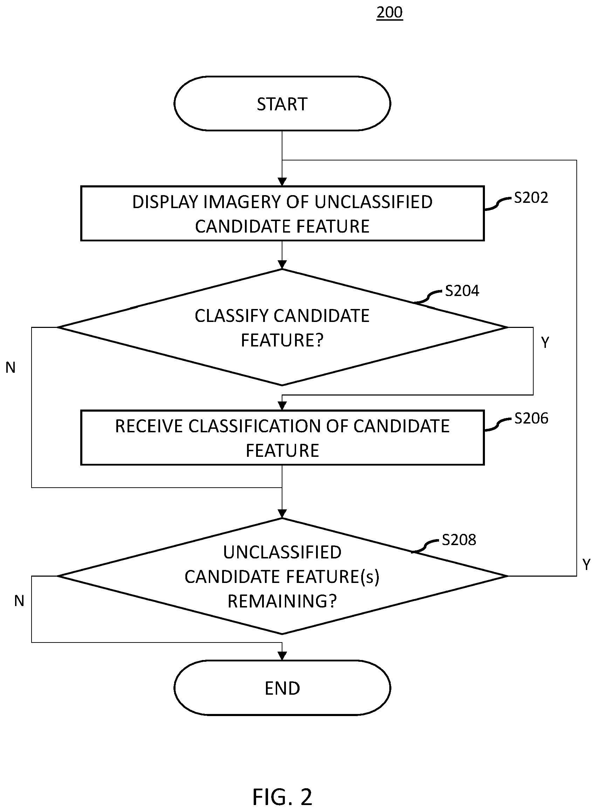

In yet another embodiment, operation of the third positioner 110 and camera 113 can be effected in a semi-automated manner to effect inspection and classification of each candidate feature. In this embodiment, the third positioner 110 is operated (e.g., by the controller 114, the remote system 126, or the like or any combination thereof) to cause the camera 113 to capture imagery of each candidate feature. Captured imagery can then be displayed (e.g., by a monitor of the user interface 120, the remote system 126, or the like or any combination thereof) and the user can manually classify the feature (e.g., via an input device of the user interface 120 or of the remote system 126, etc.) associated with the displayed imagery, e.g., as defective or not defective. An example process for collecting manually-input classifications of candidate features is discussed in greater detail below with respect to FIG. 2.

FIG. 2, a process, such as process 200, may be executed to facilitate manual classification of candidate features. Referring to FIG. 2, at S202, an image of an unclassified candidate feature that has been inspected is displayed to the user (e.g., via the user interface 120, via a user interface of the remote system 126, etc.). Optionally, other information associated with the candidate feature, identity or location of the candidate feature in the workpiece 102, can also displayed to the user (e.g., via the user interface 120, via a user interface of the remote system 126, etc.). At S204, the user is prompted (e.g., via the user interface 120, via the user interface of the remote system 126, etc.) to indicate whether they want to classify the candidate feature currently displayed. If the user agrees to classify the candidate feature then, at S206, the user classifies (e.g., via the user interface 120, via the user interface of the remote system 126, etc.) the candidate feature (e.g., as "defective" or "not defective") based on the displayed imagery. If any unclassified candidate features remain, the above-described process is repeated. At S208, the user is prompted (e.g., via the user interface 120, via the user interface of the remote system 126, etc.) to indicate whether they want to classify another unclassified candidate feature. If another unclassified candidate feature is to be inspected, the above-discussed process is repeated for a new, unclassified candidate feature. If, at S208, no unclassified candidate features remain, the process is terminated. If, at S204, the user indicates that they do not (e.g., via the user interface 120, via a user interface of the remote system 126, etc.) want to classify a currently-displayed candidate feature, then the process proceeds to S208.

### iii. Other Aspects Concerning Directed Inspection

It will be appreciated that information concerning the classification of any inspected, candidate feature - whether classified manually or in an automated manner - can be stored in association with that feature as auxiliary information, which can be used for later analysis, traceability purposes, or the like or any combination thereof.

Embodiments discussed above have thus far discussed how the output of the candidate feature selection process can be used to control the operation of the apparatus 100 (e.g., the third positioner 110, the camera 113, or a combination thereof) during inspection. In another embodiment, however, the output of the candidate feature selection process can be input to an inspection system (also referred to as a "remote inspection system") that is not part of the apparatus 100 (e.g., provided as discussed above). Examples of remote inspection systems that can perform inspection of identified candidate features can include an AOI, an AXI system, an ICT) system, a wafer probe system, or the like or any combination thereof.

In one embodiment, a remote inspection system is an embodiment of the remote system 126, and so the controller 114 is operative to transmit the output of the candidate feature selection process to the remote inspection system (i.e., remote system 126) via the network 124. In another embodiment, however, the controller 114 is operative to write the output the candidate feature selection to process to any machine-readable medium (e.g., to a flash-drive inserted in the USB port of the communications module 122), or transmit the output the candidate feature selection to any other system (e.g., a remote system 126) where it can be recorded in any suitable or desired machine-readable medium (e.g., a flash-drive) connected to the remote system 126. Thereafter, the output the candidate feature selection, as stored by the machine-readable medium, can thereafter be input to the remote inspection system in any suitable or desired manner.

### XIII. Conclusion

The foregoing is illustrative of embodiments and examples of the invention, and is not to be construed as limiting thereof. Although a few specific embodiments and examples have been described with reference to the drawings, those skilled in the art will readily appreciate that many modifications to the disclosed embodiments and examples, as well as other embodiments, are possible without materially departing from the novel teachings and advantages of the invention. Accordingly, all such modifications are intended to be included within the scope of the invention as defined in the claims. For example, skilled persons will appreciate that the subject matter of any sentence, paragraph, example or embodiment can be combined with subject matter of some or all of the other sentences, paragraphs, examples or embodiments, except where such combinations are mutually exclusive. The scope of the present invention should, therefore, be determined by the following claims.

### Claims

1.    A laser-processing apparatus (100) for forming features in a workpiece (102), the apparatus comprising:

a laser source (104) operative to generate a beam of laser energy;

a scan lens (112) arranged operative to focus the beam of laser energy such that the focused beam of laser energy is deliverable to the workpiece;

at least one beam positioner (106, 108) arranged between the laser source and the scan lens, the at least one beam positioner operative to scan the focused beam of laser energy relative to the workpiece within a scanning range projected onto the workpiece by the scan lens;

at least one stage operative to impart relative movement between the workpiece and at least one selected from the group consisting of the scan lens and the camera;

a camera (113) having a field of view and operative to capture imagery of an object within the field of view; and

at least one sensor (130) operative to generate process control data, the process control data representing at least one selected from the group consisting of: a) at least one characteristic of the apparatus either before, during or after the workpiece is processed to form a set of features, b) at least one characteristic of the workpiece either before, during or after the workpiece is processed to form a set of features, and c) at least one characteristic of an ambient environment in which the apparatus is located either before, during or after the workpiece is processed to form a set of features;

a controller (114) communicatively coupled to the at least one stage, the camera and one or more databases in which process control data is stored in association with auxiliary information, wherein the auxiliary information represents a location of each feature to be formed in the workpiece (102);

**characterised in that**:

the controller is operative to execute a candidate feature selection process in which features are identified which should be inspected due to their relatively high probability of being defective, whereby:

process control data, representing, at least, laser energy delivered to the workpiece (102), is processed by comparing it to a laser energy threshold to estimate whether any of the features formed in the workpiece (102) are defective; and

the location of any feature estimated to be defective is identified.

2. The apparatus of claim 1, wherein the controller (114) is operative to execute at least a portion of the candidate feature selection process.

3. The apparatus of any one of claims 1 to 2, further comprising a communications module (122) communicatively coupled to the controller (114) and operative to transmit data, wherein the controller is operative to transmit an output of the candidate selection process to a remote system (126) through the communications module.

4. The apparatus of any one of claims 1 to 2, further comprising a communications module (122) communicatively coupled to the controller (114) and operative to transmit data, wherein the controller is operative to facilitate execution of the candidate feature selection process by transmitting at least a portion of the process control data to a remote system (126) through the communications module.

5. The apparatus of claim 4, wherein the remote system (126) includes at least one computing system.

6. The apparatus of any one of claims 3 to 5, further comprising a communications module (122) communicatively coupled to the controller (114) and operative to transmit data, wherein the communications module is operative to receive data and wherein the controller is operative to receive an output of at least a portion of the candidate feature selection process from the remote system (126) through the communications module.

7. The apparatus of any one of claims 3 to 6, further comprising a communications module (122) communicatively coupled to the controller (114) and operative to transmit data, wherein the controller is operative to transmit at least a portion of the process control data to at least one of the one or more databases through the communications module.

8. The apparatus of any one of claims 1 to 7, further comprising a frame arranged to support the scan lens (112) relative to the workpiece (102), wherein the scan lens is coupled to the frame.

9. The apparatus of claim 8, further comprising a stage coupled between the frame and the scan lens (112), wherein the stage is operative to move the scan lens.

10. The apparatus of any one of claims 1 to 9, wherein the controller (114) is further operative to control an operation of the at least one stage and camera (113) to effect an inspection operation of each identified location.

11. The apparatus of any one of claims 1 to 10, wherein the controller (114) is further operative control an operation of the at least one stage and the camera (113) based on user input received at the user interface (120) to effect an inspection operation of each identified location.

12. The apparatus of any one of claims 1 to 11, further comprising a communications module (122) communicatively coupled to the controller (114) and operative to transmit data, wherein the controller is further operative control an operation of the at least one stage and the camera (113) based data received from a remote system (126) through the communications module to effect an inspection operation of each identified location.

13. The apparatus of any one of claims 1 to 12, wherein the at least one sensor (130) includes at least one selected from the group consisting of a laser power meter and a beam characterization tool.

14. The apparatus of any one of claims 1 to 13, wherein the at least one sensor (130) includes at least one selected from the group consisting of a temperature sensor and a humidity sensor.

15. The apparatus of any one of claims 1 to 14, wherein the at least one sensor (130) includes at least one selected from the group consisting of a camera, a laser displacement sensor, a confocal laser sensor, an interferometer, an inductive coating thickness gauge, a stylus profilometer and a touch probe.

**Patentansprüche**

1. Laserbearbeitungsvorrichtung (100) zur Bildung von Merkmalen in einem Werkstück (102), wobei die Vorrichtung Folgendes umfasst:

> eine Laserquelle (104), die dazu betriebsfähig ist, einen Laserenergiestrahl zu erzeugen;
> eine Abtastlinse (112), die betriebsfähig dazu angeordnet ist, den Laserenergiestrahl derart zu fokussieren, dass der fokussierte Laserenergiestrahl dem Werkstück zuführbar ist;
> mindestens einen Strahlpositionierer (106, 108), der zwischen der Laserquelle und der Abtastlinse angeordnet ist, wobei der mindestens eine Strahlpositionierer dazu betriebsfähig ist, den fokussierten Laserenergiestrahl relativ zu dem Werkstück innerhalb eines Abtastbereichs abzutasten, der durch die Abtastlinse auf das Werkstück projiziert wird;
> mindestens einen Tisch, der dazu betriebsfähig ist, eine Relativbewegung zwischen dem Werkstück und mindestens einem, das aus der Gruppe ausgewählt ist, die aus der Abtastlinse und der Kamera besteht, zu erteilen;
> eine Kamera (113), die ein Sichtfeld aufweist und dazu betriebsfähig ist, Bilder eines Objekts innerhalb des Sichtfelds aufzunehmen; und

mindestens einen Sensor (130), der dazu betriebsfähig ist, Prozesssteuerungsdaten zu erzeugen, wobei die Prozesssteuerungsdaten mindestens eines darstellen, das aus der Gruppe ausgewählt ist, die aus Folgendem besteht: a) mindestens eine Eigenschaft der Vorrichtung entweder bevor, während oder nachdem das Werkstück bearbeitet wurde, um einen Satz von Merkmalen zu bilden, b) mindestens eine Eigenschaft des Werkstücks entweder bevor, während oder nachdem das Werkstück bearbeitet wurde, um einen Satz von Merkmalen zu bilden, und c) mindestens eine Eigenschaft einer Umgebung, in der sich die Vorrichtung entweder bevor, während oder nachdem das Werkstück bearbeitet wurde, um einen Satz von Merkmalen zu bilden, befindet;
ein Steuergerät (114), das kommunikativ an den mindestens einen Tisch, die Kamera und eine oder mehrere Datenbanken gekoppelt ist, in denen Prozesssteuerungsdaten in Verbindung mit Hilfsinformationen gespeichert sind, wobei die Hilfsinformationen eine Position jedes in dem Werkstück (102) auszubildenden Merkmals darstellen; **dadurch gekennzeichnet, dass**:
das Steuergerät dazu betriebsfähig ist, einen Kandidatenmerkmal-Auswahlprozess auszuführen, bei dem Merkmale identifiziert werden, die aufgrund ihrer relativ hohen Wahrscheinlichkeit, defekt zu sein, überprüft werden sollten, wodurch:

> Prozesssteuerungsdaten, die zumindest die Laserenergie darstellen, die dem Werkstück (102) zugeführt wird, verarbeitet werden, indem sie mit einem Laserenergieschwellenwert verglichen werden, um einzuschätzen, ob eines der in dem Werkstück (102) ausgebildeten Merkmale defekt ist; und
> die Position eines als defekt eingeschätzten Merkmals identifiziert wird.

2. Vorrichtung nach Anspruch 1, wobei das Steuergerät (114) dazu betriebsfähig ist, zumindest einen Teil des Kandidatenmerkmal-Auswahlprozesses auszuführen.

3. Vorrichtung nach einem der Ansprüche 1 bis 2, ferner umfassend ein Kommunikationsmodul (122), das kommunikativ an das Steuergerät (114) gekoppelt ist und dazu betriebsfähig ist, Daten zu übertragen, wobei das Steuergerät dazu betriebsfähig ist, eine Ausgabe des Kandidatenauswahlprozesses über das Kommunikationsmodul an ein entferntes System (126) zu übertragen.

**4.** Vorrichtung nach einem der Ansprüche 1 bis 2, ferner umfassend ein Kommunikationsmodul (122), das kommunikativ an das Steuergerät (114) gekoppelt ist und dazu betriebsfähig ist, Daten zu übertragen, wobei das Steuergerät dazu betriebsfähig ist, die Ausführung des Kandidatenmerkmal-Auswahlprozesses zu erleichtern, indem mindestens ein Teil der Prozesssteuerdaten über das Kommunikationsmodul an ein entferntes System (126) übertragen wird.

**5.** Vorrichtung nach Anspruch 4, wobei das entfernte System (126) mindestens ein Computersystem beinhaltet.

**6.** Vorrichtung nach einem der Ansprüche 3 bis 5, ferner umfassend ein Kommunikationsmodul (122), das kommunikativ mit dem Steuergerät (114) gekoppelt ist und dazu betriebsfähig ist, Daten zu übertragen, wobei das Kommunikationsmodul dazu betriebsfähig ist, Daten zu empfangen, und wobei das Steuergerät dazu betriebsfähig ist, eine Ausgabe von zumindest einem Teil des Kandidatenmerkmal-Auswahlprozesses von dem entfernten System (126) über das Kommunikationsmodul zu empfangen.

**7.** Vorrichtung nach einem der Ansprüche 3 bis 6, ferner umfassend ein Kommunikationsmodul (122), das kommunikativ mit dem Steuergerät (114) gekoppelt ist und dazu betriebsfähig ist, Daten zu übertragen, wobei das Steuergerät dazu betriebsfähig ist, zumindest einen Teil der Prozesssteuerdaten über das Kommunikationsmodul an mindestens eine der einen oder mehreren Datenbanken zu übertragen.

**8.** Vorrichtung nach einem der Ansprüche 1 bis 7, ferner umfassend einen Rahmen, der dazu angeordnet ist, die Abtastlinse (112) relativ zu dem Werkstück (102) zu stützen, wobei die Abtastlinse an den Rahmen gekoppelt ist.

**9.** Vorrichtung nach Anspruch 8, ferner umfassend einen Tisch, der zwischen dem Rahmen und der Abtastlinse (112) gekoppelt ist, wobei der Tisch dazu betriebsfähig ist, die Abtastlinse zu bewegen.

**10.** Vorrichtung nach einem der Ansprüche 1 bis 9, wobei das Steuergerät (114) ferner dazu betriebsfähig ist, einen Betrieb des mindestens einen Tisches und der Kamera (113) zu steuern, um einen Inspektionsbetrieb jeder identifizierten Position zu bewirken.

**11.** Vorrichtung nach einem der Ansprüche 1 bis 10, wobei das Steuergerät (114) ferner dazu betriebsfähig ist, einen Betrieb des mindestens einen Tisches und der Kamera (113) basierend auf Benutzereingaben zu steuern, die an der Benutzerschnittstelle (120) empfangen werden, um einen Inspektionsbetrieb jeder identifizierten Position zu bewirken.

**12.** Vorrichtung nach einem der Ansprüche 1 bis 11, ferner umfassend ein Kommunikationsmodul (122), das kommunikativ an das Steuergerät (114) gekoppelt ist und dazu betriebsfähig ist, Daten zu übertragen, wobei das Steuergerät ferner dazu betriebsfähig ist, einen Betrieb des mindestens einen Tisches und der auf der Kamera (113) basierten Daten, die von einem entfernten System (126) über das Kommunikationsmodul empfangen werden, zu steuern, um einen Inspektionsbetrieb jeder identifizierten Position zu bewirken.

**13.** Vorrichtung nach einem der Ansprüche 1 bis 12, wobei der mindestens eine Sensor (130) mindestens eines beinhaltet, das aus der Gruppe ausgewählt ist, die aus einem Laserleistungsmesser und einem Strahlcharakterisierungswerkzeug besteht.

**14.** Vorrichtung nach einem der Ansprüche 1 bis 13, wobei der mindestens eine Sensor (130) mindestens eines beinhaltet, das aus der Gruppe ausgewählt ist, die aus einem Temperatursensor und einem Feuchtigkeitssensor besteht.

**15.** Vorrichtung nach einem der Ansprüche 1 bis 14, wobei der mindestens eine Sensor (130) mindestens eines beinhaltet, das aus der Gruppe ausgewählt ist, die aus einer Kamera, einem Laserverschiebungssensor, einem konfokalen Lasersensor, einem Interferometer, einem induktiven Beschichtungsdickenmesser, einem Stiftprofilometer und einem Berührungssensor besteht.

**Revendications**

**1.** Appareil de traitement au laser (100) destiné à former des éléments dans une pièce (102), l'appareil comprenant :

une source laser (104) opérationnelle pour générer un faisceau d'énergie laser ;
une lentille de balayage (112) agencée opérationnelle pour focaliser le faisceau d'énergie laser de sorte que le faisceau d'énergie laser focalisé puisse être délivré à la pièce ;
au moins un positionneur de faisceau (106, 108) agencé entre la source laser et la lentille de balayage, l'au moins un positionneur de faisceau étant opérationnel pour balayer le faisceau d'énergie laser focalisé par rapport à la pièce dans une plage de balayage projetée sur la pièce par la lentille de balayage ;

au moins une platine opérationnelle pour induire un mouvement relatif entre la pièce et au moins l'un choisi dans le groupe constitué par la lentille de balayage et la caméra ;

une caméra (113) présentant un champ de vision et étant opérationnelle pour capturer des images d'un objet dans le champ de vision ; et

au moins un capteur (130) opérationnel pour générer des données de commande de processus, les données de commande de processus représentant au moins l'un choisi dans le groupe constitué par : a) au moins une caractéristique de l'appareil avant, pendant ou après le traitement de la pièce pour former un ensemble d'éléments, b) au moins une caractéristique de la pièce avant, pendant ou après le traitement de la pièce pour former un ensemble d'éléments, et c) au moins une caractéristique d'un environnement ambiant dans lequel l'appareil se trouve avant, pendant ou après le traitement de la pièce pour former un ensemble d'éléments ;

un contrôleur (114) couplé en communication à l'au moins une platine, à la caméra et à une ou plusieurs bases de données dans lesquelles des données de commande de processus sont stockées en association avec des informations auxiliaires, dans lequel les informations auxiliaires représentent un emplacement de chaque élément à former dans la pièce (102) ;

**caractérisé en ce que** :

le contrôleur est opérationnel pour exécuter un processus de sélection d'élément candidat dans lequel sont identifiés des éléments devant être inspectés en raison de leur probabilité relativement élevée d'être défectueux,

moyennant quoi :

des données de commande de processus, représentant, au moins, l'énergie laser délivrée à la pièce (102), sont traitées en les comparant à un seuil d'énergie laser pour estimer si l'un quelconque des éléments formés dans la pièce (102) est défectueux ; et l'emplacement de tout élément jugé défectueux est identifié.

**2.** Appareil de la revendication 1, dans lequel le contrôleur (114) est opérationnelle pour exécuter au moins une partie du processus de sélection d'élément candidat.

**3.** Appareil de l'une quelconque des revendications 1 à 2, comprenant en outre un module de communication (122) couplé en communication au contrôleur (114) et opérationnel pour transmettre des données, dans lequel le contrôleur est opérationnel pour transmettre une sortie du processus de sélection de candidat à un système distant (126) via le module de communication.

**4.** Appareil de l'une quelconque des revendications 1 à 2, comprenant en outre un module de communication (122) couplé en communication au contrôleur (114) et opérationnel pour transmettre des données, dans lequel le contrôleur est opérationnel pour faciliter l'exécution du processus de sélection d'élément candidat en transmettant au moins une partie des données de commande de processus à un système distant (126) via le module de communication.

**5.** Appareil de la revendication 4, dans lequel le système distant (126) comprend au moins un système informatique.

**6.** Appareil de l'une quelconque des revendications 3 à 5, comprenant en outre un module de communication (122) couplé en communication au contrôleur (114) et opérationnel pour transmettre des données, dans lequel le module de communication est opérationnel pour recevoir des données et dans lequel le contrôleur est opérationnel pour recevoir une sortie d'au moins une partie du processus de sélection d'élément candidat en provenance du système distant (126) via le module de communication.

**7.** Appareil de l'une quelconque des revendications 3 à 6, comprenant en outre un module de communication (122) couplé en communication au contrôleur (114) et opérationnel pour transmettre des données, dans lequel le contrôleur est opérationnel pour transmettre au moins une partie des données de commande de processus à au moins l'une de l'une ou plusieurs bases de données via le module de communication.

**8.** Appareil de l'une quelconque des revendications 1 à 7, comprenant en outre une monture agencée pour supporter la lentille de balayage (112) par rapport à la pièce (102), dans lequel la lentille de balayage est couplée à la monture.

**9.** Appareil de la revendication 8, comprenant en outre une platine couplée entre la monture et la lentille de balayage (112), dans lequel la platine est opérationnelle pour déplacer la lentille de balayage.

**10.** Appareil de l'une quelconque des revendications 1 à 9, dans lequel le contrôleur (114) est en outre opérationnelle pour commander une opération de l'au moins une platine et de la caméra (113) pour effectuer une opération d'inspection de chaque emplacement identifié.

**11.** Appareil de l'une quelconque des revendications 1 à 10, dans lequel le contrôleur (114) est en outre opérationnel pour commander une opération de l'au moins une platine et de la caméra (113) sur la base d'une entrée d'utilisateur reçue au niveau de l'interface utilisateur (120) pour effectuer une opération d'inspection de chaque emplacement identifié.

**12.** Appareil de l'une quelconque des revendications 1 à 11, comprenant en outre un module de communication (122) couplé en communication au contrôleur (114) et opérationnel pour transmettre des données, dans lequel le contrôleur est en outre opérationnel pour commander une opération de l'au moins une platine et de la caméra (113) sur la base de données reçues d'un système distant (126) via le module de communication pour effectuer une opération d'inspection de chaque emplacement identifié.

**13.** Appareil de l'une quelconque des revendications 1 à 12, dans lequel l'au moins un capteur (130) comprend au moins l'un choisi dans le groupe constitué par un compteur de puissance laser et un outil de caractérisation de faisceau.

**14.** Appareil de l'une quelconque des revendications 1 à 13, dans lequel l'au moins un capteur (130) comprend au moins l'un choisi dans le groupe constitué par un capteur de température et d'un capteur d'humidité.

**15.** Appareil de l'une quelconque des revendications 1 à 14, dans lequel l'au moins un capteur (130) comprend au moins l'un choisi dans le groupe constitué par une caméra, un capteur de déplacement laser, un capteur laser confocal, un interféromètre, une jauge d'épaisseur de revêtement inductif, un profilomètre à stylet et une sonde tactile.

FIG. 1

200

```
                          ┌─────────────────┐
                          │      START      │
                          └────────┬────────┘
                                   │
                                   ▼
          ┌─────────────────────────────────────────┐
          │    DISPLAY IMAGERY OF UNCLASSIFIED       │ ⌐ S202
          │          CANDIDATE FEATURE               │
          └────────────────────┬────────────────────┘
                               │
                               ▼
                    ◇─────────────────────◇              S204
         N    ◇─────  CLASSIFY CANDIDATE   ─────◇    Y
              ◇           FEATURE?             ◇
                    ◇─────────────────────◇
                               │
                               ▼
          ┌─────────────────────────────────────────┐
          │    RECEIVE CLASSIFICATION OF CANDIDATE   │ ⌐ S206
          │                FEATURE                   │
          └────────────────────┬────────────────────┘
                               │
                               ▼
                    ◇─────────────────────◇              S208
              ◇       UNCLASSIFIED          ◇
         N    ◇   CANDIDATE FEATURE(s)       ◇     Y
              ◇        REMAINING?           ◇
                    ◇─────────────────────◇
                               │
                               ▼
                          ┌─────────────────┐
                          │       END       │
                          └─────────────────┘
```

FIG. 2

**EP 4 149 715 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019236616 A1
- WO 2019236616 A
- US 5751585 A
- US 5798927 A
- US 5847960 A
- US 6606999 B
- US 7605343 B
- US 8680430 B
- US 8847113 B
- US 20140083983
- US 7244906 B
- US 20140196140
- US 20140263201 A
- US 20140263223 A